# EUROPEAN PATENT SPECIFICATION

(11) **EP 3 572 948 B1**
(45) Date of publication and mention of the grant of the patent: **24.11.2021**
(21) Application number: 18770706.2
(22) Date of filing: 08.02.2018
(51) Int. Cl.: G06F 13/16

(54) **RESOURCE MANAGEMENT METHOD AND DEVICE**
RESSOURCENVERWALTUNGSVERFAHREN UND -VORRICHTUNG
PROCÉDÉ ET DISPOSITIF DE GESTION DE RESSOURCES

(30) Priority: 22.03.2017 CN 201710172275
(43) Date of publication of application: 27.11.2019
(73) Proprietor: Huawei Technologies Co., Ltd., Longgang District Shenzhen, Guangdong 518129 (CN)
(72) Inventor: QIU, Xin, Shenzhen Guangdong 518129 (CN); ZHANG, Jinbin, Shenzhen Guangdong 518129 (CN)
(74) Representative: Gill Jennings & Every LLP
(86) International application number: PCT/CN2018/075787
(87) International publication number: WO 2018/171357

(56) References cited:
- EP-A2- 1 216 553
- CN-A- 103 902 348
- CN-A- 104 391 656
- CN-A- 105 589 750
- CN-A- 106 371 888
- US-A1- 2013 339 599

## Description

### TECHNICAL FIELD

This application relates to the storage field, and in particular, to a resource management method and apparatus.

### BACKGROUND

Non-volatile memory express (Non-Volatile Memory express, NVMe) is a new interface bus specification. Compared with a conventional input/output (input/output, I/O) interface, a delay of a read/write operation can be reduced by using an NVMe interface.

At present, NVMe has been widely applied to both local storage access and remote storage access. In NVMe, when an access device requests to perform read/write access to a storage device, for example, a host requests to perform read/write access to a non-volatile memory subsystem (NVM subsystem), the read/write access is implemented by sending an access request message in an administration queue pair (queue pair) and an I/O queue pair. An administration queue pair is used to store a to-be-processed management command and a completed management command. Only one administration queue pair is configured for each controller and each host. Each administration queue pair includes an administration submission queue (administration submission queue, ASQ) and an administration completion queue (admin completion queue, ACQ). An I/O queue pair is used to store a to-be-processed read/write access request and a completed read/write access request. One or more I/O queue pairs may be configured for each host and each controller. Each I/O queue pair includes a submission queue (submission queue, SQ) and a completion queue (completion queue, CQ). Local access or remote access, access to different NVM subsystems by a host, access to a same NVM subsystem by different hosts, or access to a same NVM subsystem by a same host may need to be implemented by using an administration queue pair and an I/O queue pair. A queue resource may be provided by a main memory in a host or an NVMe solid state drive (solid state drive, SSD).

However, there is a reserved resource in a resource allocated by a system or an NVMe device to each queue. For example, when a host applies for an SQ having a queue depth of five units, and one access request message can be stored in each unit, but at a current moment, only one access request message for a storage device is stored in the SQ, remaining four queue resources that can store a read/write access request are not used. In addition, in the system, very limited resources can be allocated to a queue, and it is very likely to cause a problem that a newly added host cannot obtain through application a queue resource because most or all of queue resources are reserved. US2013/339599 discloses methods and systems for adaptive queue depth management. EP1216553 discloses a quality of service management in a packet data router system.

### SUMMARY

This application provides a resource management method and apparatus, to release an idle resource in time based on current resource utilization, thereby improving resource utilization. The present invention is defined by the method of independent claim 1 and by the apparatus of independent claim 10. Additional features of the invention are presented in the dependent claims. In the following, parts of the description and drawing referring to embodiments, which are not covered by the claims, are not presented as embodiments of the invention, but as examples useful for understanding the invention.

### BRIEF DESCRIPTION OF DRAWINGS

FIG. 1 is a schematic diagram of a non-volatile memory express over Peripheral Component Interconnect Express architecture according to an embodiment of the present application;
FIG. 2 is a schematic architectural diagram of an application scenario of a resource management method and apparatus according to an embodiment of the present application;
FIG. 3 is a schematic architectural diagram of another application scenario of a resource management method and apparatus according to an embodiment of the present application;
FIG. 4 is a schematic diagram of a queue pair for a host and an NVM subsystem according to an embodiment of the present application;
FIG. 5 is a schematic diagram of another queue pair for a host and an NVM subsystem according to an embodiment of the present application;
FIG. 6 is a schematic diagram of another queue pair for a host and an NVM subsystem according to an embodiment of the present application;
FIG. 7 is a schematic flowchart of a resource management method according to an embodiment of the present application;
FIG. 8 is a schematic flowchart of another resource management method according to an embodiment of the present application;
FIG. 9 is a schematic block diagram of a resource management apparatus according to an embodiment of the present application;
FIG. 10 is a schematic block diagram of a resource management controller according to an embodiment of the present application; and
FIG. 11 is a schematic block diagram of a resource management host according to an embodiment of the present application.

### DESCRIPTION OF EMBODIMENTS

The following describes the technical solutions in detail in this application with reference to the accompanying drawings.

To help understand the embodiments of the present application, scenarios applicable to the embodiments of the present application are first simply described.

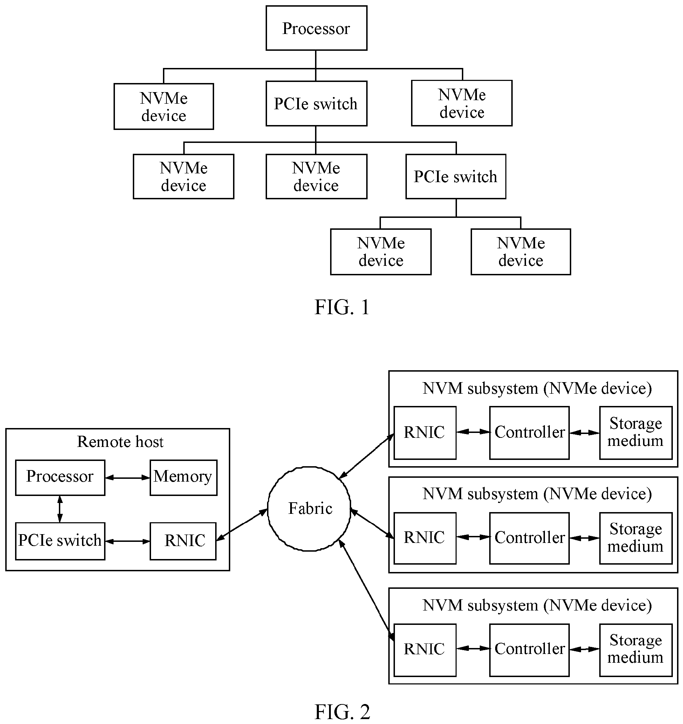

FIG. 1 is a schematic diagram of an NVMe over Peripheral Component Interconnect Express (Peripheral Component Interconnect Express, PCIe) (NVMe over PCIe) architecture according to an embodiment of the present application. As shown in the figure, in the NVMe over PCIe architecture, a central processing unit (central processing unit, CPU) in a host may be directly connected to an NVMe device (such as an NVMe SSD) by using a PCIe bus. The CPU may also be connected to a PCIe switch, and the NVMe device may communicate with the CPU by using the PCIe switch, or the NVMe device is extended by using a next-level PCIe switch. The PCIe switch may route data to a plurality of downstream NVMe devices, or may transmit data of a plurality of NVMe devices to a processor. A root complex (root complex, RC) may be integrated into the CPU. The RC is configured to manage endpoint devices in the NVMe over PCIe architecture. For example, the RC allocates a bus number and memory mapped input/output (memory mapped input/output, MMIO) space to each endpoint device, or sends an access request message of the host to each endpoint device.

It should be understood that, the schematic diagram of the NVMe over PCIe architecture shown in FIG. 1 is merely for illustration purposes, and should not constitute any limitation on this application. For example, the root complex may also be hardware independent of the CPU. The NVMe over PCIe architecture is not particularly limited in this application.

In a scenario and the architecture shown in FIG. 1, the processor may be provided by the host. Each NVMe device may be understood as an NVM subsystem, and each NVM subsystem includes one or more controllers (controller) and one or more storage mediums such as a 2D NAND flash, a 3D NAND flash, a 3D XPoint, and a dynamic random access memory (dynamic random access memory, DRAM). The host may interact with the controller in the NVM subsystem, to complete read/write access to the storage medium by the host. In other words, each NVM subsystem may communicate with the host by using the controller. Herein, communication includes signaling exchange and data transmission.

In the scenario and the architecture shown in FIG. 1, the host may be a physical server, or a virtual machine running on a physical server. The controller may be provided by the NVMe device, for example, may be an independent physical control chip on the NVMe SSD.

It should be noted that, generally, each NVMe device includes one independent control chip. The control chip may be logically divided into one or more controllers, configured to manage storage mediums corresponding to the one or more controllers. In this embodiment of the present application, unless otherwise specified, a "controller" is a logical controller corresponding to a storage medium. Herein, a "correspondence" between a controller and a storage medium may be understood as follows: A storage medium managed by a controller is related to a physical address of the storage medium, for example, a physical address of a storage medium managed by a controller #A may be 1-99; and a physical address of a storage medium managed by a controller #B may be 100-199. It should be understood that, herein, a correspondence between the controller and the physical address of the storage medium is merely an example, and should not constitute any limitation on this application. A person skilled in the art may understand that, different controllers may control storage mediums having same or different physical addresses. This is not particularly limited in this application. For brevity, unless otherwise specified, the correspondence between a controller and a storage medium may be understood as a correspondence between the controller and a physical address of the storage medium below.

It should be understood that, a case in which one independent control chip in the NVMe device is divided into one or more controllers described herein is merely for illustration purposes, and should not constitute any limitation on this application. A possibility that each logical controller in the NVMe device is manufactured into an independent physical chip is not excluded in this application.

FIG. 2 is a schematic architectural diagram of an application scenario of a resource management method according to an embodiment of the present application. FIG. 2 is a schematic architectural diagram of an NVMe over fabric (NVMe over Fabric, NoF) application other than the NVMe over PCIe architecture, for example, NVMe over remote direct memory access (remote direct memory access, RDMA) (NVMe over RDMA) or NVMe over fiber channel (NVMe over fiber channel, NVMe over FC). In an NoF architecture shown in FIG. 2, a remote host is connected to one or more NVM subsystems by using a fabric. In other words, FIG. 2 shows a scenario of remote access to a storage resource. The remote host may be a physical server, or a virtual machine running on a physical server. Each remote host may include a processor, a memory, a PCIe switch, and a remote direct memory access network interface card (RDMA network interface card, RNIC). Each NVM subsystem may be understood as an independent NVMe device (such as an NVMe SSD). Each NVM subsystem may also include an RNIC, a controller, and a storage medium. The fabric may be understood as a network such as the Ethernet or a fiber optic network.

It should be noted that, the host shown in FIG. 1 accesses the NVMe device by using the PCIe interface, and may also be referred to as a local host (local host). In comparison, in this specification, in the architecture described with reference to FIG. 2, the host accesses the NVMe device by using the fabric, and may be referred to as a remote host (remote host).

It should be noted that, FIG. 2 is a schematic diagram showing that only one remote host is connected to one or more NVM subsystems by using the fabric. During specific implementation, alternatively, a plurality of remote hosts may be connected to one or more NVM subsystems by using the fabric. For ease of description, in the following embodiments of the present application, one remote host is used as an example for detailed description.

It can be learned from FIG. 2 that, the remote host may directly perform remote access to the storage medium in each NVM subsystem by using a network, and each NVM subsystem may transmit signaling and data to the host by using the RNIC and the network. In other words, each NVM subsystem is a target (target) NVMe device of the remote host.

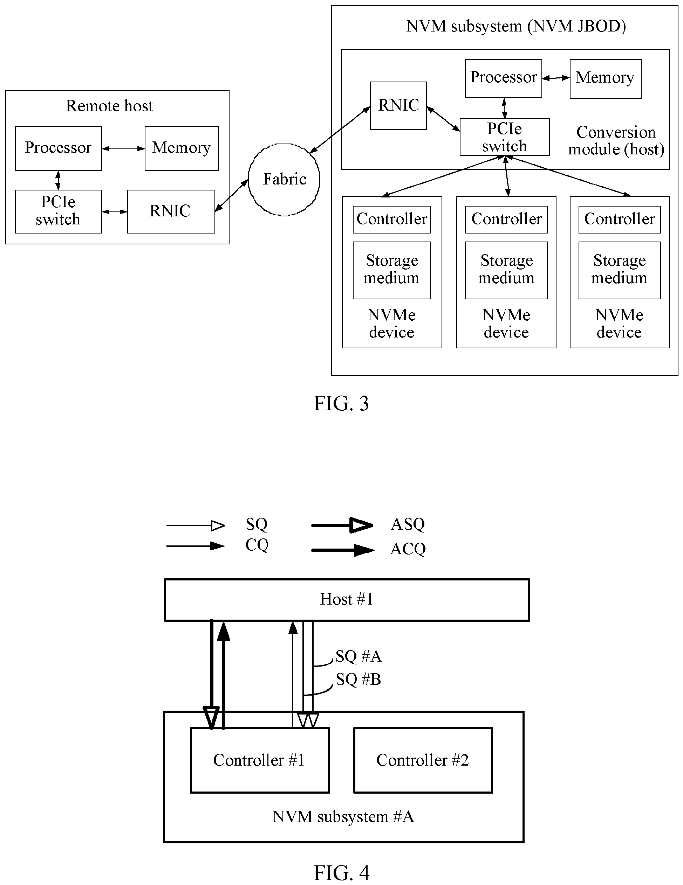

FIG. 3 is a schematic architectural diagram of another application scenario of a resource management method and apparatus according to an embodiment of the present application. An architecture shown in FIG. 3 includes an NoF architecture and an NVMe over PCIe architecture nested in the NoF architecture.

Specifically, in the NoF architecture, one or more remote hosts communicate with an NVM Just a Bundle Of Disks (Just a Bunch of Disks, JBOD) by using a fabric. The NVM JBOD is a set including a plurality of NVMe devices. The NVM JBOD includes a plurality of NVM devices and one conversion module. Each NVM device includes one controller and a plurality of storage mediums. The conversion module is configured to: convert, into a PCIe packet, a network packet (such as an RDMA packet or an FC packet) sent by the remote host and carrying a read/write access request, and send the PCIe packet to a controller corresponding to a to-be-accessed storage medium.

The remote host is configured to send an access request message to the NVM JBOD. A form of the remote host may be similar to or the same as a form of the remote host shown in FIG. 2. The conversion module and each NVMe device may both be independent physical devices, and are connected to a same motherboard by using a PCIe bus, to implement their corresponding functions. If the NVM JBOD is understood as a server, the conversion module may be understood as a board on the server. If the remote host sends an access request message to the NVMe device in the server, the remote host first needs to send the access request message to the board, and the board forwards the access request message to a target NVMe device.

The conversion module includes a processor, a memory, an RNIC, and a PCIe switch. The NVMe device as an endpoint device in the PCIe bus accesses the PCIe switch. Each NVMe device may include a controller and one or more storage mediums. An implementation of the controller is the same as that in FIG. 1, and details are not described herein again. In the NoF architecture shown in FIG. 3, a manner of data transmission between the conversion module and each NVMe device is the same as that in the NVMe over PCIe structure in FIG. 1, to be specific, communication is performed by using the PCIe interface. Each NVMe device is equivalent to the NVM subsystem in the NVMe over PCIe architecture, namely, the target NVMe device in the NVMe over PCIe architecture. The conversion module needs to convert, into a PCIe packet, a received NoF packet sent by the remote host, and then send the PCIe packet to the target NVMe device.

With reference to the NVMe over PCIe architecture shown in FIG. 1, the remote host in the NoF architecture shown in FIG. 3 may be understood as a primary host and is configured to send an access request message to the NVM JBOD; and the NVM JBOD may be understood as a primary NVM subsystem corresponding to the primary host and is configured to process the access request message sent by the remote host. Specifically, when the access request message of the remote host is processed in the NVM JBOD, a process of processing the access request message is the same as a processing manner in the NVMe over PCIe architecture. In this case, the conversion module is equivalent to the host in the NVMe over PCIe architecture, and is configured to receive the access request message. The conversion module may also be referred to as a secondary host, and correspondingly, each NVMe device (such as an NVMe SSD) in the NVM subsystem may be referred to as a secondary NVM subsystem. The conversion module receives the access request message sent by the remote host, converts the access request message into a PCIe packet, and then sends the access request message to the target NVMe device. The target NVMe device performs a read or write operation on the access request message, to complete processing of the access request message of the remote host. A manner in which the conversion module converts, into a PCIe packet, a network packet sent by the remote host and carrying an access request message is the prior art, and details are not described again in this application.

Further, signaling exchange between the host and the controller or between the remote host and the NVM subsystem may be implemented by using a queue resource configured for the host and the controller or for the remote host and the NVM subsystem. Specifically, two queue pairs, namely, an input/output queue pair and an administration queue pair are defined in a data processing process. An administration queue pair is used to store a to-be-processed management command and a completed management command. Only one administration queue pair is configured for each controller and each host. Each administration queue pair includes an administration submission queue and an administration completion queue. An I/O queue pair is used to store a to-be-processed read/write access request and a completed read/write access request. One or more I/O queue pairs may be configured for each host and each controller. Each I/O queue pair includes a submission queue (including an SQ and an ASQ) and a completion queue (including a CQ and an ACQ). An access request message to be processed by the host is stored in the SQ, and a result of an access request message delivered by the host and processed completely by the controller is stored in the CQ. The submission queue and the completion queue are used as a bridge for communication between the host and the controller.

In a process of processing read/write access to the NVM subsystem by the host, the host may configure at least one I/O queue pair for the host and a controller corresponding to a to-be-accessed target NVMe device, and configure different priorities, to ensure, in priority, resource allocation for a queue pair having a higher priority. The host may store, based on a read/write access request and a priority of a queue pair, the read/write access request into an I/O queue pair having a corresponding priority, to ensure a processing process of a queue having a higher priority, thereby improving processing efficiency.

A plurality of I/O queue pairs may also be created for the host and the controller. A process in which the host creates an I/O queue pair may be that one or more I/O queue pairs are pre-created for each controller and each host in an initialization phase, or when the host receives an access request message, an I/O queue pair used to store the access request message and a processing result is created. The essence of creating an I/O queue pair by the host may be understood as dividing a partial area from a storage space of a queue resource to store a message of a specified queue.

When the host needs to perform read/write access to a storage medium in an NVM subsystem, the host needs to create a queue pair for the host and the NVM subsystem. Specifically, the host needs to create an administration queue pair and an I/O queue pair with a controller in the NVM subsystem. During creation of the I/O queue pair, the host may specify a mapping relationship between a submission queue and a completion queue in a queue pair for the host and the controller. Specifically, during creation of the queue pair, the host may specify matching queue identifiers (queue identifier, Queue ID), to configure the mapping relationship between the submission queue and the completion queue. For each queue, an address of a queue resource occupied by the queue and a queue depth are configured. The queue depth is used to indicate a quantity of units that can store an access request message in the queue, and a unit storing each request message is also referred to as an entry. A maximum queue depth is preconfigured for each queue, and the preconfigured maximum queue depth is used to identify a maximum value of a quantity of access request messages that can be stored in the queue within a same time (or at a same moment). Correspondingly, a currently detected actual queue depth of each queue is used to identify a quantity of access request messages currently actually stored in the queue.

Optionally, priority information may further be configured for each queue.

If the host needs to perform parallel read/write operations on a plurality of storage mediums in an NVMe device, for example, the host simultaneously performs a read/write operation on data in the plurality of storage mediums or a plurality of pieces of data in a same storage medium, the host may first create an administration queue pair and an I/O queue pair for the host and a controller in the NVMe device based on a physical address of a to-be-accessed target NVMe device. The administration queue pair may include one ASQ and one ACQ. The I/O queue pair may include one SQ and one CQ, or may include a plurality of SQs and one CQ. Alternatively, a plurality of I/O queue pairs may be created for the host and the controller, where each I/O queue pair includes one SQ and one CQ. Then the host sends an access request message to the controller by using the one or more SQs created for the host and the controller, and the controller may send a complete message to the host by using the CQ.

Alternatively, when a plurality of NVMe devices to be accessed by the host are respectively managed by different controllers, the host may create an administration queue pair and an I/O queue pair with the different controllers. At least one I/O queue pair is created for each controller and the host. Then, the host sends an access request message to a corresponding controller by using an SQ in each I/O queue pair, and each controller may send a complete message to the host by using a CQ.

It should be noted that, in the NVMe over PCIe architecture, a plurality of SQs in each I/O queue pair may correspond to one CQ. In the NoF architecture, each SQ in each I/O queue pair may correspond to one CQ. In addition, in the NoF architecture, one or more I/O queue pairs may be configured for each host and each controller, and one SQ in each I/O queue pair corresponds to one CQ. Each I/O queue pair includes one SQ and one CQ, to implement parallel and high-speed interaction between the host and the controller, so that instructions stored in the queue pairs do not interfere with each other, thereby improving access execution efficiency.

In the scenarios shown in FIG. 1 to FIG. 3, a queue resource may be generally provided by the memory in the host. For example, a storage area of a specified size is divided from the memory in the host, to create an administration queue pair or an I/O queue pair. A mapping relationship between each queue and a part of the storage area of the specified size that is divided from the host may be established. When an access request message needs to be stored by using a storage unit in a queue, the access request message is stored in a storage area mapped to the queue. Alternatively, a queue resource may be provided by the NVM subsystem. Specifically, a storage area of a specified size may be divided by the NVMe device (such as the NVMe SSD) in the NVM subsystem from, for example, any NVMe SSD in the NVM subsystem, to create an administration queue pair or an I/O queue pair. This is not particularly limited in this application. When there are a plurality of controllers in the NVM subsystem, the controllers may share a storage area used to create a queue pair.

It may be understood that, regardless of a provider of a queue resource, for the queue resource, a storage area of a specified size is reserved in a storage area in the host or the NVM subsystem, for communication between the host and the NVM subsystem that, for example, includes signaling exchange and/or data transmission. Therefore, the queue resource is limited by a size of a storage resource provided by the provider and used to store each queue, and there are also a very limited quantity of queues. When some or all queue resources allocated by a system are already occupied by a current queue for the host and the controller but are not fully used, during processing of a newly added access request message, the host may not obtain through application sufficient available resources, but there is an idle and non-used resource in the allocated queue resources. Consequently, a problem that the newly added access request message cannot be responded to in time, and resource utilization is relatively low may be caused.

In queue resources, a resource allocated to each unit in each queue may be preset. When storage space associated with a single unit in a queue (such as an SQ) is sufficient for storing one access request message, an operation type and to-be operated data of the access request message are stored in the unit. Therefore, communication (or information transmission) described in this application may be understood as signaling transmission, or signaling and data transmission. For brevity, descriptions of same or similar cases are omitted below.

A specific procedure in which the host communicates with the controller by using a queue pair is as follows: If the host provides a queue resource, after receiving an access request message, the processor of the host places the access request message in an SQ, and then sends the access request message to the controller in the NVMe device by using the PCIe bus (corresponding to the NVMe over PCIe architecture) or the fabric (corresponding to the NoF architecture). Subsequently, the controller performs a corresponding operation based on the access request message. After completing an instruction that requests to be completed by the access request message, the controller may send a complete message to the host by using the PCIe bus or the fabric. The complete message is stored in a CQ after arriving at the host, and is finally notified to the processor of the host. It may be understood that, if the controller provides a queue resource, a specific procedure of communication between the host and the controller is similar to that described above. For brevity, details are not described herein again.

Therefore, communication between the host and the controller by using the queue resource may be understood as a part of a complete signaling or data transmission process, namely, a procedure of communication between the host and the controller. For brevity, descriptions of same or similar cases are omitted below.

FIG. 4 is a schematic diagram of a queue pair for a host and an NVM subsystem according to an embodiment of the present application. As shown in FIG. 4, a host #1 communicates with an NVM subsystem #A by using an administration queue pair and an I/O queue pair. Specifically, a queue resource may be provided by a memory in the host or the NVM subsystem. One administration queue pair and one I/O queue pair are configured for the host #1 and a controller #1 in the NVM subsystem #A. The administration queue pair includes one ASQ and one ACQ. FIG. 4 shows the I/O queue pair created for the host #1 and the controller #1. The I/O queue pair includes two SQs (an SQ #A and an SQ #B) and one CQ. A resource for the I/O queue pair may be provided by the host or an NVMe device in the NVM subsystem #A. Because the controller #1 and a controller #2 are in a same NVM subsystem, regardless of whether a queue resource is provided by the memory in the host or the NVM subsystem, queue resources used by the controller #1 and the controller #2 are divided from same storage space, and there is a resource contention relationship between the controller #1 and the controller #2. If the host #1 expects to initiate access to a storage medium corresponding to the controller #2 in the NVM subsystem #A at this time, where the storage medium may be denoted as a storage medium #1, the host #1 needs to create an administration queue pair and an I/O queue pair with the controller #2. However, due to limited queue resources, if a current remaining queue resource is no longer sufficient for creating an administration queue and an I/O queue for the host #1 and the controller #2, access to the storage medium #1 by the host #1 may not be responded to in time, causing a processing failure.

It should be noted that, FIG. 4 shows only a connection relationship between one host and one NVM subsystem, and connection relationships between a plurality of hosts and a plurality of NVM subsystems are the same as or similar to that in FIG. 4. For brevity, details are not described herein again.

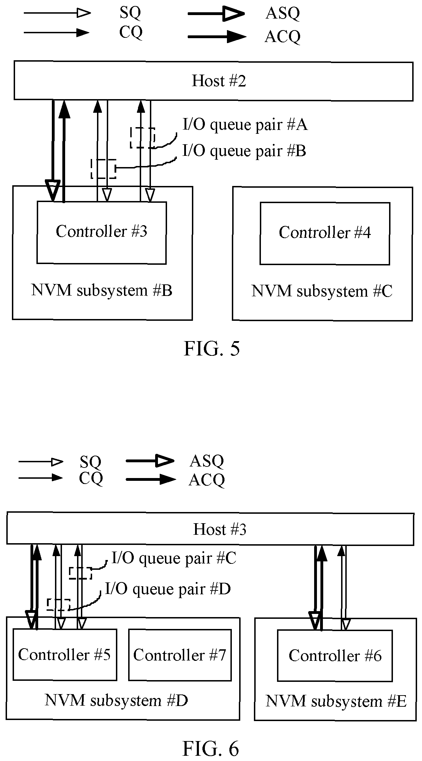

FIG. 5 is a schematic diagram of another queue pair for a host and an NVM subsystem according to an embodiment of the present application. A difference between the schematic diagram of the queue pair for the host and the NVM subsystem shown in FIG. 5 and that shown in FIG. 4 lies in that, there are a plurality of I/O queue pairs for the host and the NVM subsystem in FIG. 5.

Specifically, a queue resource may be provided by a memory in the host or the NVM subsystem. One administration queue pair and two I/O queue pairs are configured for a host #2 and a controller #3 in an NVM subsystem #B. The I/O queue pairs include a queue pair #A and a queue pair #B. When a new I/O queue pair needs to be created for the host #2 and the controller #3, or a depth of a queue in an existing I/O queue pair needs to be increased, if a queue resource is provided by the NVM subsystem #B and there are insufficient remaining resources, a newly added access request message cannot be processed. For different NVM subsystems, if a queue resource is provided by the memory in the host, when the host #2 needs to create an administration queue pair and an I/O queue pair with an NVM subsystem #C, a queue pair creation failure is also caused due to insufficient queue resources. If a queue resource is provided by the NVM subsystem, storage areas of specified sizes are divided from respective NVMe SSDs of different NVM subsystems to provide queue resources. As shown in FIG. 5, when the host #2 needs to create a queue pair with a controller #4 in the NVM subsystem #C, a new queue pair may be created by using a queue resource provided by the NVM subsystem #C, and there is no queue resource contention relationship between the NVM subsystem #B and NVM subsystem #C.

In the two possible architectures shown in FIG. 2 and FIG. 3, a same NVMe device may be simultaneously accessed by a plurality of hosts, and each host needs to implement remote access by using a queue pair created for the host and the controller. Each controller can interact with only one host at a particular moment. Each host may send an access request message to a corresponding controller by using an SQ in an I/O queue pair created with each controller, and each controller may send a complete message to the host by using a CQ in the I/O queue pair created with the host. When a newly added host cannot obtain through application a queue resource because there are many idle resources in queue resources occupied by one or more hosts, a remote access request of the newly added host cannot be responded to in time.

FIG. 6 is a schematic diagram of another queue pair for a host and an NVM subsystem according to an embodiment of the present application. A difference between FIG. 6 and FIG. 4 and FIG. 5 lies in that, in FIG. 6, there is at least one I/O queue pair for a host and each of two NVM subsystems. Specifically, a queue resource may be provided by a memory in the host or the NVM subsystem. A host #3 may access an NVM subsystem #D and an NVM subsystem #E. One administration queue pair and two I/O queue pairs are configured for the host #3 and a controller #5 in the NVM subsystem #D. One administration queue pair and one I/O queue pair are configured for the host #3 and a controller #6 in the NVM subsystem #E. It is assumed that a queue resource is provided by the NVM subsystem, to be specific, a queue resource for the host #3 and the controller #5 is provided by the NVM subsystem #D. For example, a queue resource is provided by an NVMe SSD 1 in the NVM subsystem, and a queue resource for the host #3 and the controller #6 is provided by an NVMe SSD 2 in the NVM subsystem #E. In this case, if a newly added host expects to initiate access to a storage resource corresponding to another controller in the NVM subsystem #D, for example, a newly added host #4 needs to perform read/write access to a storage resource #3 corresponding to a controller #7, an administration queue pair and an I/O queue pair need to be created for the host #4 and the controller #7. However, because the NVM subsystem #D provides limited queue resources, if available resources in the queue resources currently provided by the NVM subsystem #D are no longer sufficient for creating the administration queue pair and the I/O queue pair for the host #4 and the controller #7, access to the storage resource #3 by the host #4 may not be responded to in time, causing a processing failure. If a queue resource is provided by the memory in the host, and remaining resources in queue resources provided by the host #4 are insufficient for creating the administration queue pair and the I/O queue pair for the host #4 and the controller #7, a processing failure of an access request message between the host #4 and the controller #7 is also caused.

It can be learned from the foregoing descriptions with reference to the descriptions of the accompanying drawings that, regardless of whether a queue resource is provided by the memory in the host or a queue resource is provided by the NVMe device of the NVM subsystem, because of limited queue resources, for an access request message of a newly added host or an access request message of the host for a newly added NVM subsystem, sufficient resources may not be obtained through application to create an administration queue pair and an I/O queue pair. Consequently, the access request message sent by the host may not be responded to in time, causing an access delay, and a processing failure of the access request message. On the other hand, some queue resources are occupied but are not well used, and are in an idle state, leading to low resource utilization. In view of this, this application provides a resource management method, to manage and optimize a queue resource, so as to improve resource utilization, thereby responding to a newly added access request in time, reducing an access delay, and improving user experience.

It should be noted that, there is only one administration queue pair for one host and one controller, the only administration queue pair occupies limited resources, and the resource management method provided in this application is mainly specific to a resource used by an I/O queue pair. However, this should not constitute any limitation on this application, and a possibility that more administration queue pairs are defined in a future protocol is not excluded in this application. In addition, the resource management method provided in this application is also applicable to resource management for a plurality of administration queue pairs.

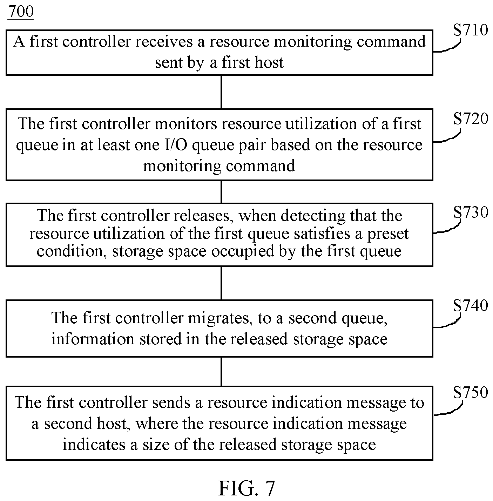

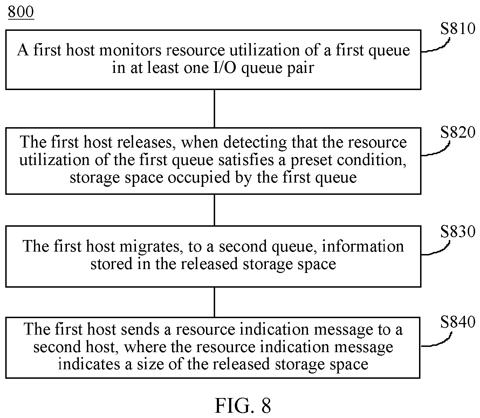

A resource management method in an embodiment of the present application is described in detail below with reference to FIG. 7 and FIG. 8.

It should be understood that, FIG. 7 and FIG. 8 each are a schematic flowchart of a resource management method according to an embodiment of the present application, but these steps or operations are merely examples, and in this embodiment of the present application, another operation, or variants of operations in FIG. 7 and FIG. 8 may further be performed. In addition, the steps in FIG. 7 and FIG. 8 may be performed in a sequence different from that shown in FIG. 7, and all operations in FIG. 7 and FIG. 8 may not need to be performed.

It can be learned from the foregoing descriptions that, a provider of the queue resource varies, and a resource management apparatus is also provided by different devices. For ease of understanding, an example in which a controller is used as the resource management apparatus and an example in which a processor is used as the resource management apparatus are separately used below to describe this embodiment of the present application in detail.

It should be noted that, in the architecture shown in FIG. 3, an administration queue pair and an I/O queue pair are configured for the remote host and the conversion module in the NVM JBOD. In the NVM JBOD, an administration queue pair and an I/O queue pair are also configured for the conversion module and the NVMe device. When the administration queue pair and the I/O queue pair are configured for the remote host and the conversion module in the NVM JBOD, the processor or the RNIC in the conversion module may implement a function of the controller in the NVM device, and is configured to communicate with the remote host. The memory in the remote host and the memory in the conversion module may be configured to provide a queue resource. The schematic diagram of the queue pair for the host and the controller shown in each of FIG. 4 to FIG. 6 is also applicable to the architecture in FIG. 3.

FIG. 7 is a schematic flowchart of a resource management method 700 according to an embodiment of the present application. Specifically, in the resource management method shown in FIG. 7, a resource management apparatus is a controller. In other words, a queue resource may be provided by an NVMe device in an NVM subsystem.

It should be understood that, the resource management method 700 in this embodiment of the present application is applicable to the architectures in FIG. 1 to FIG. 3. The architecture includes at least one host and at least one NVM subsystem, and each NVM subsystem includes at least one controller. Without loss of generality, interaction between a first host and a first controller in a first NVM subsystem is used as an example below to describe the resource management method in this embodiment of the present application in detail. It may be understood that, the first host is any host in a system; the first NVM subsystem is any NVM subsystem in the system; the first controller is a controller corresponding to a target storage medium which the first host sends an access request message for processing an access request message by the first host; one administration queue pair and at least one I/O queue pair are configured for the first host and the first controller; and the first host communicates with the first controller by using the administration queue pair and the I/O queue pair. As shown in FIG. 7, the method 700 includes the following steps.

S710: The first controller receives a resource monitoring command sent by the first host, where the resource monitoring command is used to instruct the first controller to monitor resource utilization of a first queue in the at least one I/O queue pair.

The first host may send an asynchronous event request (Asynchronous Event Request, AER) message to the first controller. The AER message includes a field used to indicate the resource monitoring command.

Specifically, the host may exchange signaling with the controller by using a message of an AER type. The AER message includes a plurality of fields, and the fields are defined to indicate different events. In this embodiment of the present application, a reserved field in a plurality of existing fields may be used to indicate the resource monitoring command, or a newly added field in an existing AER message may be used to indicate the resource monitoring command. This is not particularly limited in this application.

For example, an existing AER message type is shown in the following table:

| Value (Value) | Definition (Definition) |
|---|---|
| 0 h | Error status (Error status) |
| 1 h | Control/health status (SMART/Health status) |
| 2 h | Notice (Notice) |
| 3 h to 5 h | Reserved (Reserved) |
| 6 h | I/O command set specific status (I/O Command Set specific status) |
| 7 h | Vendor specific (Vendor specific) |

In the table, values of 3 h to 5 h are all reserved value fields in the AER message type, and may be defined in a protocol. In this embodiment of the present application, the resource monitoring command may be indicated by using any one of the reserved values in the reserved fields in the AER message.

It should be understood that, the fields and the values in the foregoing AER message type are merely for illustration purposes, and should not constitute any limitation on this application. An indication manner of the resource monitoring command is not particularly limited in this application.

The first queue may be any SQ or CQ in the at least one I/O queue. A resource for the at least one I/O queue pair may be understood as storage space configured by the first host for the at least one I/O queue pair for communication between the first host and the first controller, or storage space occupied by the at least one I/O queue pair. In this embodiment of the present application, an example in which the first controller is the resource management apparatus is used for description. Therefore, it may be learned from the foregoing descriptions that, a resource occupied by the at least one I/O queue pair may be an independent resource reserved in storage space of the first NVM subsystem for the at least one I/O queue pair, and the resource is managed by the first controller. In other words, the resource occupied by the at least one I/O queue pair is a part of a storage medium in an NVMe device managed by the first controller in the NVM subsystem.

S720: The first controller monitors the resource utilization of the first queue in the at least one I/O queue pair based on the resource monitoring command.

There may be one or more I/O queue pairs for the first host and the first controller. The resource command sent by the first host to the first controller may instruct the first controller to simultaneously monitor resource utilization of queues in the one or more I/O queue pairs for the first host and the first controller.

If the one or more I/O queue pairs are configured for the first host and the first controller, the first controller may monitor an SQ and/or a CQ in one I/O queue pair according to the monitoring command, or may simultaneously monitor SQs and/or CQs in a plurality of I/O queue pairs. The monitoring command may further instruct the first controller to monitor and manage, in priority based on priorities of I/O queue pairs, resource utilization of a first queue in an I/O queue pair having a higher priority, or monitor resource utilization of first queues in all or some I/O queue pairs according to a service requirement. For one I/O queue pair monitored by the first controller, when the I/O queue pair includes a plurality of SQs and one CQ, the first controller may monitor resource utilization of one SQ and the CQ, or simultaneously monitor resource utilization of the plurality of SQs and the CQ; or the first controller may monitor resource utilization of only one or more SQs, without monitoring resource utilization of the CQ. When the I/O queue pair includes one SQ and one CQ, the first controller may monitor resource utilization of the SQ and/or the CQ. The resource utilization of the first queue is used to identify utilization of storage space occupied by the first queue, and may be indicated by a quantity of times or frequency that the first host and the first controller transmit information by using a resource for the first queue. For ease of description, in the following descriptions of this application, an example in which the first controller monitors one SQ or CQ is used for further detailed description.

Generally, one I/O queue pair includes only one CQ. For example, a plurality of SQs may be mapped to one CQ, or one SQ may be mapped to one CQ. If only one I/O queue pair including a plurality of SQs and one CQ is configured for the first host and the first controller, the CQ needs to be configured. Therefore, only distribution and utilization of resources occupied by the plurality of SQs need to be monitored. If a plurality of I/O queue pairs each including one SQ and one CQ are configured for the first host and the first controller, resource utilization of the SQ and the CQ in the I/O queue pair may be respectively monitored, or resource utilization of only the SQ may be monitored. This is because, as described above, the SQ is used to store an access request message sent by the first host and to be processed, and the CQ is used to store a result of an access request message sent by the first host and completed by the first controller. It may be understood that, after the access request message stored in the SQ is sent to the first controller, the first controller may execute a corresponding instruction, or may not execute the instruction at this time because of a resource conflict or another reason; or because of a particularity of some instructions, after executing a corresponding instruction, the first controller does not need to reply a complete message. Therefore, a quantity of access request messages stored in the SQ may be greater than or equal to a quantity of complete messages stored in the CQ. In other words, when the resource utilization of the SQ is relatively low, the resource utilization of the CQ is also relatively low. Therefore, resource utilization of the I/O queue pair may be determined by monitoring only the SQ, or resource utilization of the I/O queue pair may be determined by monitoring the SQ and the CQ respectively.

Further, the resource utilization of the first queue may be a quantity of times that the first host and the first controller transmit information within a first preset time period by using the first queue.

If the first preset time period is one second, the resource utilization of the first queue is a quantity of times that an access request message is stored in or removed from the first queue or a result of an access request message is returned within one second.

Optionally, the resource utilization of the first queue may be an effective queue depth ratio of the first queue within a second preset time period.

The effective queue depth ratio of the first queue is a ratio of an actual effective queue depth of the first queue to a preconfigured maximum queue depth.

For example, if the maximum queue depth preconfigured for the first queue is 5, to be specific, the first queue includes five units, one access request message or one result of an access request message may be stored in each unit, but the actual effective queue depth is 1, to be specific, an access request message or a result of an access request message is stored in only one unit in the first queue at a current moment, the effective queue depth ratio of the first queue is 1:5.

In this embodiment of the present application, for the first controller, the first controller may be triggered to enable a resource monitoring function by using the resource monitoring command sent by the first host, or the first controller may voluntarily enable a resource monitoring function. Herein, it should be noted that, the resource monitoring function may be understood as a newly added function of the controller. The controller may voluntarily enable the resource monitoring function, or a host having a communication connection relationship may trigger enabling of the resource monitoring function. When the resource monitoring function is triggered by the host, the host may further voluntarily determine whether to enable or disable the resource monitoring function, to better control the NVM subsystem to manage a resource.

In this embodiment of the present application, a functional module, namely, a resource monitoring module may be added to the NVM subsystem to which the first controller belongs, and the resource monitoring module is configured to monitor a resource. Specifically, the resource monitoring module may monitor resources for one or more queue pairs in the NVM subsystem according to the received resource monitoring command, or may voluntarily monitor resources for one or more queue pairs in the NVM subsystem. The resource monitoring module may be implemented by an existing controller in the NVM subsystem, or a new physical chip may be added, and the physical chip may be specially used for implementing the resource monitoring function, and performing resource monitoring on each storage resource in the NVM subsystem. This is not particularly limited in this application.

S730: The first controller releases, when detecting that the resource utilization of the first queue satisfies a preset condition, storage space occupied by the first queue.

For a policy of releasing the first queue, the first controller may voluntarily determine, according to a predefined release policy, how to release the storage space occupied by the first queue, or after detecting that utilization of a first resource satisfies the preset condition, the first controller may send a notification message to the host, and the host instructs, according to a predefined release policy, the first controller how to release the storage space occupied by the first queue. Specifically, in a process of releasing the storage space occupied by the first queue, either of the following manners may be used:
Manner 1: The first controller voluntarily determines, according to the predefined release policy, how to release the storage space occupied by the first queue.

For example, a device manager may preconfigure the release policy in the first controller. For example, the release policy may be defined as that: if it is detected that the resource utilization of the first queue satisfies the preset condition, all of the storage space occupied by the queue is released; or if it is detected that the resource utilization of the first queue satisfies the preset condition, a part of the storage space occupied by the first queue is released (for example, 30% of the storage space occupied by the queue is released).

In Manner 1, all or a part of the storage space occupied by the first queue may be directly released according to the predefined release policy.

Preset condition 1: When it is detected, within the first preset time period, that the quantity of times that the first host and the first controller transmit information is less than or equal to a first preset threshold, a maximum queue depth preconfigured for the first queue is reduced; and when it is detected, within the first preset time period, that the quantity of times that the first host and the first controller transmit information is less than or equal to a second preset threshold, the first queue is deleted. The preconfigured maximum queue depth is used to identify a maximum value of a quantity of access request messages that can be stored in the first queue within a same time, and the first preset threshold is greater than the second preset threshold. For example, if the monitored first queue is a first SQ, assuming that the first preset threshold is 3 and the second preset threshold is 1, and if the first controller detects that a quantity of times that the first host and the first controller transmit information by using the first SQ is 2, the quantity of times that the first host and first controller transmit information is less than or equal to 3, and some resources occupied by the first queue are released, for example, 30% of the storage space occupied by the first queue is released according to the preset policy. If the first controller detects that the quantity of times that the first host and the first controller transmit information by using the first SQ is 1, the quantity of times that the first host and the first controller transmit information is equal to 1, and the storage space occupied by the first queue is deleted. When the first controller determines to delete the storage space occupied by the first queue, and there is still a to-be-processed access request message in the first queue, the access request message may be stored in another SQ or CQ in the same I/O queue pair.

Preset condition 2: When it is detected, within the second preset time period, that the effective queue depth ratio of the first queue is less than or equal to a third preset threshold, the maximum queue depth preconfigured for the first queue is reduced; and when it is detected, within the second preset time period, that the effective queue depth ratio of the first queue is less than or equal to a fourth preset threshold, the first queue is deleted. The third preset threshold is greater than the fourth preset threshold.

For example, the first queue monitored by the first controller is a first SQ, and it is assumed that a queue depth (queue depth) preconfigured for the first SQ is 1000 units (entries), the third preset threshold of the effective queue depth ratio is 50%, and the fourth preset threshold is 6%. If an average queue depth actually used by the first controller within the second preset time period is only 10 units, an average effective queue depth ratio of the first SQ within the second preset time period is only 100/1000, namely, 10%, which is much less than the third preset threshold, and the first controller may release, according to the preset release policy, a part of storage space occupied by the first SQ, for example, release 30% of the storage space occupied by the first SQ, to be specific, release storage space having a queue depth of 300 units in the storage space occupied by the first queue. If an average queue depth actually used by the first controller within the second preset time period is only 50 units, an average effective queue depth ratio of the first SQ within the second preset time period is only 50/1000, namely, 5%, which is less than the fourth preset threshold, and the first controller may delete, according to the preset release policy, all of the storage space occupied by the first SQ. The same as a case in which the first queue is deleted in Preset condition 1, if there is still a to-be-processed access request message in the first queue, the first controller may store the access request message in another SQ or CQ in the same I/O queue pair.

Manner 2: The first controller reports the resource utilization of the first queue to the first host, the first host determines the release policy, and the first controller executes the release policy.

In Manner 2, the first host may determine the release policy based on the received resource utilization of the first queue, where the release policy may be determined with reference to manners in Preset condition 1 and Preset condition 2 described in Manner 1, and send the release policy to the first controller; and the first controller executes the release policy; or the first host may determine the release policy according to a service requirement, for example, directly notify the first controller if a service is completed or terminated; and the first controller executes the release policy. A specific process in which the first controller releases, according to the release policy, the storage space occupied by the first queue is already described in detail in Manner 1. For brevity, details are not described herein again.

It should be noted that, some storage resources occupied by the first queue may be released by reducing the queue depth of the first queue, and all of the storage space occupied by the first queue may be released by deleting the first queue. It may be understood that, release of the storage space occupied by the first queue is deletion of a mapping relationship between the queue and the storage space that is defined before the host creates the queue. The storage space is no longer occupied, and can be used to establish a new mapping relationship for another to-be-created queue.

It should be understood that, the method for determining whether the resource utilization of the first queue satisfies the preset condition, the first preset time period, the second preset time period, and the first preset threshold to the fourth preset threshold listed in the foregoing examples are merely for illustration purposes, and should not constitute any limitation on this application. For example, the preset thresholds listed above may be predefined through human evaluation, or set by the host or notified to the first controller, or determined by the first controller based on historical statistics. The resource management apparatus may further flexibly adjust the preset thresholds based on current resource usage and a size of a resource that can be provided by a system. For example, the first controller or the first host may determine, based on the monitored resource utilization of the first queue and current utilization of a queue resource in the system, whether to release some or all of resources for the first queue. In addition, a possibility that resource utilization of a queue is evaluated by using another parameter that can indicate the resource utilization is not excluded in this application. Further, in Manner 2, the first controller may specifically notify the first host of the utilization of the first queue by using the following steps and operations:
When determining that the resource utilization of the first queue satisfies the preset condition, the first controller sends an AER complete message to the first host. The AER complete message is used to notify the first host that the resource utilization of the first queue satisfies the preset condition.

The first controller receives a resource configuration message that is sent by the first host based on the AER complete message. The resource configuration message is used to instruct the first controller to release a part or all of the storage space occupied by the first queue.

The AER complete message may be understood as a feedback message of the AER message in S710. In other words, in a process of executing an instruction in the AER message, if detecting an exception (to be specific, that the resource utilization satisfies the preset condition described in this embodiment of the present application) condition, the first controller feeds back the AER complete message to the first host.

Optionally, the AER complete message may carry a queue identifier of the first queue, to advise the first host releasing some or all of resources for the first queue.

It should be understood that, the first queue is used as an example above to describe, in detail, specific methods and processes of monitoring the resource utilization of the first queue and releasing some or all of resources for the first queue when the preset condition is satisfied. When there are a plurality of I/O queue pairs for the first host and the first controller, a resource occupied by a queue in each of the plurality of queue pairs may be monitored and managed by using a same method.

In this embodiment of the present application, the first controller may determine, based on resource utilization of a queue (for example, including an SQ or a CQ), whether to release the queue. If resource utilization of a queue does not satisfy the preset condition, no processing may be performed on a resource occupied by the queue, and the queue may continue to be used for communication between the first host and the first controller; and the resource utilization of the queue continues to be monitored.

In this embodiment of the present application, release of some or all of resources in the first resource may be understood as release of resources occupied by some units in the first queue or release of all resources occupied by the first queue. A released resource may be a resource storing no information, or may be a resource storing information.

Optionally, when a released resource for the first queue stores information, after S730, the method 700 further includes the following step:
S740: The first controller migrates, to a second queue, an access request message stored in the released storage space.

Specifically, if the first controller voluntarily determines to release a part or all of the storage space occupied by the first queue, the first controller may notify the first host before the release, and the first host may cancel an access request message (or an instruction or signaling) stored in the to-be-released storage space, generate a new access request message, and place the newly generated access request message in the second queue. It may be understood that, the newly generated access request message and the canceled access request message request to access a same resource, to be specific, the newly generated access request message and the canceled access request message are two same access request messages.

After receiving the AER complete message sent by the first controller, the first host determines to release the storage space occupied by the first queue, and the first host may voluntarily cancel signaling stored in the to-be-released storage space, generate new signaling, and place the newly generated signaling in the second queue.

In this application, a process in which the first host cancels an access request message in a to-be-released resource, generates a new access request message, and places the newly generated access request message in the second queue may be understood as migration of information in the first queue to the second queue. It should be noted that, if the to-be-released resource for the first queue stores an access request message and data that requests to be written in by the access request message, the first host may migrate both the access request message and the data to the second queue. In other words, migrated information includes signaling, or signaling and data.

It may be understood that, when a released resource is a resource occupied by an SQ (for example, the first SQ), information stored in the released resource may be migrated to another SQ (for example, the second SQ) in a same I/O queue pair. When released resources are resources for an SQ and a CQ (for example, the first I/O queue pair), information stored in the released resource for the SQ may be correspondingly migrated to another SQ (for example, the second SQ), and information stored in the released resource for the CQ may be correspondingly migrated to another CQ (for example, the second CQ).

Still referring to FIG. 4, if the host #1 needs to create an administration queue pair and an I/O queue pair with the controller #2, when either (for example, denoted as the SQ #A) of the two SQs for the host #1 (namely, an example of the first host) and the controller #1 (namely, an example of the first controller) satisfies either of the foregoing preset conditions, some or all of resources for the SQ #A may be released, and information carried in the SQ #A may be migrated to the other (for example, denoted as the SQ #B) of the two SQs. In addition, the released resource is used to create the administration queue pair and the I/O queue pair for the host #1 and the controller #2.

Still referring to FIG. 6, if the host #3 needs to create an administration queue pair and an I/O queue pair with the controller #7, when either (for example, which may be an I/O queue pair #C) of two queue pairs (for example, respectively denoted as the queue pair #C and a queue pair #D) for the host #3 (namely, an example of the first host) and the controller #5 (namely, an example of the first controller) satisfies either of the foregoing preset conditions, some or all of resources for the I/O queue pair #C may be released, and information carried in the I/O queue pair #C may be migrated to the other (for example, which may be the queue pair #D) of the two I/O queue pairs. In addition, the released resource is used to create the administration queue pair and the I/O queue pair for the host #3 and the controller #7.

It may be understood that, in this embodiment of the present application, the queue resource is provided by the NVM subsystem. Therefore, resources in different NVM subsystems cannot be shared. If a new NVM subsystem (for example, denoted as an NVM subsystem #F) is added, the host #3 needs to access the NVM subsystem #F, so that a released resource for the host #3 and the controller #5 cannot be used to create an administration queue pair and an I/O queue pair for the host #3 and a controller (for example, denoted as a controller #8) in the NVM subsystem #F. It should be understood that, the processing manner of the queue resource in the foregoing example is merely for illustration purposes, and should not constitute any limitation on this application. The controller may properly optimize a resource based on current resource usage of each queue and a demand of each host for a queue resource.

Optionally, after S730, namely, the first controller releases the storage space occupied by the first queue, another host in the system needs to be notified, so that the another host can use the storage space released by the first controller, to create a new I/O queue pair. A specific implementation processing is as follows:
S750: The first controller sends a resource indication message to a second host, where the resource indication message indicates a size of the released storage space.

A manner in which the first controller sends the indication message to the second host may use either of the following manners:
Manner 1: The first controller sends the resource indication message to a second controller. The second controller and the first controller are located in a same NVM subsystem, and an administration queue pair and an I/O queue pair for communication are already created for the second controller and the second host. The second controller is any controller in the first NVM subsystem other than the first controller.
Manner 2: The first controller sends the resource indication message to the first host, so that the first host sends the resource indication message to the second host.

There may be one or more second hosts.

Further, when there are a plurality of second hosts, the first controller may further send, based on priorities of the second hosts, the resource indication message to a second host having a higher priority. It may be understood that, in the system, a plurality of hosts may have a communication connection to a plurality of NVM subsystems. After a resource for the first host and the first NVM subsystem is released, the first controller may notify another controller in the first NVM subsystem, to notify the another controller of a resource size of the released resource (based on the foregoing descriptions, it is assumed that the resource is provided by the first NVM subsystem), and the resource may be used to create an administration queue pair and an I/O queue pair for the first NVM subsystem and another host (namely, the second host). The another controller may send the resource indication message to the connected second host, so that the second host creates a new administration queue pair and I/O queue pair based on the size of the resource and a demand of the second host for a resource.

For example, still referring to FIG. 6, after a resource for the host #3 and the controller #5 is released, the controller #5 may send a resource indication message to another host (namely, the second host), so that the second host creates a queue by using the released resource.

Therefore, according to the resource management method in this embodiment of the present application, the resource management apparatus monitors resource utilization of a queue in each queue pair configured for a host and a controller, and releases, when the resource utilization of the queue is relatively low, storage space occupied by the queue, so that another host or NVM subsystem can use the released storage space according to a requirement. Therefore, a queue resource is managed and optimized, and resource utilization is greatly improved by releasing an idle resource in time; and an access delay is reduced, and user experience is improved.

It should be understood that, the resource management method in the foregoing example is described by using an example in which the first NVM subsystem provides a queue resource, and the first controller is the resource management apparatus. The method is also applicable to a scenario in which the first host provides a queue resource, and a processor of the first host is the resource management apparatus.

FIG. 8 is a schematic flowchart of another resource management method 800 according to the present application. Specifically, in the resource management method shown in FIG. 8, a resource management apparatus may be a processor of a host. In other words, a queue resource may be provided by a memory in the host.

It should be understood that, the resource management method 800 in this embodiment of the present application is applicable to a system including at least one host and at least one NVM subsystem. Each NVM subsystem includes at least one controller. Without loss of generality, an example in which a first host is used as the resource management apparatus is used to describe the resource management method in this embodiment of the present application in detail below. It may be understood that, the first host is any host in the system; a first NVM subsystem is any NVM subsystem in the system; a first controller is a controller corresponding to a target storage resource requested for performing a read/write operation by the first host; one administration queue pair and at least one I/O queue pair are configured for the first host and the first controller; and the first host communicates with the first controller by using the administration queue pair and the at least one I/O queue pair.

As shown in FIG. 8, the method 800 includes the following steps.

S810: The first host monitors resource utilization of a first queue in the at least one I/O queue pair, where the at least one I/O queue pair is a queue pair configured for the first host and the first controller. In this embodiment of the present application, because storage space occupied by the at least one I/O queue pair is provided by the first host, the first host may voluntarily monitor resource utilization of a queue in the I/O queue pair in the at least one I/O queue pair, without monitoring by a controller (for example, the first controller). Therefore, a resource monitoring module may be added to the first host, to monitor a resource. Specifically, the resource monitoring module may be implemented by an existing processor of the first host, or may be implemented by adding a new module configured to implement the resource monitoring function. This is not particularly limited in this application. In addition, the first host voluntarily determines whether to enable or disable the resource monitoring function.

S820: The first host deletes, when detecting that the resource utilization of the first queue satisfies a preset condition, storage space occupied by the first queue.

The first queue may include a first SQ and/or a first CQ.

Specifically, the resource utilization of the first queue includes a quantity of times that the first host and the first controller transmit information within a first preset time period by using the first queue or the resource utilization of the first queue includes an effective queue depth ratio of the first queue within a second preset time period.

In this embodiment of the present application, when detecting that the resource utilization of the first queue satisfies the preset condition, the first host determines, in either of the following manners, how to release the storage space occupied by the first queue.

The first host may directly release, according to a predefined release policy, the storage space occupied by the first queue. In this case, whether to release the storage space occupied by the first queue may be determined by using either of the following preset conditions:
Preset condition 1: When it is detected, within the first preset time period, that the quantity of times that the first host and the first controller transmit information is less than or equal to a first preset threshold, a maximum queue depth preconfigured for the first queue is reduced; and when it is detected, within the first preset time period, that the quantity of times that the first host and the first controller transmit information is less than or equal to a second preset threshold, the first queue is deleted. The first preset threshold is greater than the second preset threshold.
Preset condition 2: When it is detected, within the second preset time period, that the effective queue depth ratio of the first queue is less than or equal to a third preset threshold, a maximum queue depth preconfigured for the first queue is reduced; and when it is detected, within the second preset time period, that the effective queue depth ratio of the first queue is less than or equal to a fourth preset threshold, the first queue is deleted. The third preset threshold is greater than the fourth preset threshold.

It should be understood that, specific processes in which the first host determines whether the first queue satisfies the preset condition, and after the preset condition is satisfied, performs a corresponding operation according to the predefined release policy are similar to the specific processes described in Manner 1 in the method 700. For brevity, details are not described herein again. It should further be understood that, the first preset time period, the second preset time period, and the first preset threshold to the fourth preset threshold in the foregoing examples may have values the same as or different from those of the first preset time period, the second preset time period, and the first preset threshold to the fourth preset threshold in the method 700. The preset threshold may be predefined through human evaluation, or determined by the first host based on historical statistics. This is not particularly limited in this application.

Further, when a released resource for the first queue stores information, after S820, the method 800 further includes the following steps.

S830: The first host migrates, to a second queue, information stored in the released resource.

The first host may voluntarily determine, based on whether resource utilization of each monitored queue satisfies the preset condition, for example, with reference to Preset condition 1 and Preset condition 2 in the method 700 described in FIG. 7, whether to release storage space occupied by the queue, and further determine to release a part or all of the storage space. After the first host determines to release the storage space occupied by the first queue, the first host may cancel information stored in the to-be-released storage space, and may further generate new signaling and place the new signaling in the second queue, to complete information migration. In addition, the first host may release a part or all of the storage space occupied by the first queue.

S840: The first host sends a resource indication message to a second host, where the resource indication message indicates a size of the released resource.

The first host may further send, based on priorities of second hosts, the resource indication message to a second host having a higher priority.

It may be understood that, in the system, various hosts have a communication connection to each other. If the first host releases a resource, the first host may directly notify another host (namely, the second host) having a communication connection of the resource indication message, so that the second host creates a new queue pair based on a size of the resource and a demand of the second host for a resource.

For example, referring to FIG. 5, if the host #2 needs to create an administration queue pair and an I/O queue pair with the controller #4, when a first queue in either (for example, which may be an I/O queue pair #A) of two I/O queue pairs (for example, respectively denoted as the I/O queue pair #A and an I/O queue pair #B) for the host #2 and the controller #3 satisfies the foregoing preset condition, some or all of resources for the first queue may be released, and information carried in the queue pair #A may be migrated to the other (for example, which may be the I/O queue pair #B) of the two I/O queue pairs. In addition, the released resource is used to create the administration queue pair and the I/O queue pair for the host #2 and the controller #4. In other words, the queue resource is provided by the host #2, and the resource may be used to create a queue pair for the host #2 and a controller in a different NVM subsystem.

It should be understood that, a specific process in which the processor of the first host as the resource management apparatus performs resource management is similar to the specific process in the foregoing method 700. For brevity, detailed descriptions thereof are omitted herein.

Therefore, according to the resource management method in this embodiment of the present application, the resource management apparatus monitors resource utilization of a queue in each queue pair configured for a host and a controller, and releases, when the resource utilization of the queue is relatively low, storage space occupied by the queue, so that another host or NVM subsystem can use the released storage space according to a requirement. Therefore, a queue resource is managed and optimized, and resource utilization is greatly improved by releasing an idle resource in time; and an access delay is reduced, and user experience is improved.

It should be understood that, the embodiment in which the processor of the first host or the first controller in the first NVM subsystem is used as the resource management apparatus in the foregoing example is merely for illustration purposes, and should not constitute any limitation on this application. In this embodiment of the present application, the first host or another apparatus or module having a resource management capability in the first NVM subsystem may perform the resource management method. An execution body of the resource management method is not particularly limited in this application.

It should be further understood that, the size of the resource for the first queue, namely, a specific value of the queue depth in the foregoing example is merely for illustration purposes, and should not constitute any limitation on this application.

It should be further understood that, the messages sent between the first host and the first controller, used to carry an instruction, and listed above are merely for illustration purposes, and should not constitute any limitation on this application. For example, the instruction may also be carried in another message. This is not particularly limited in this application.

It should be further understood that, the method for managing the resource for the first queue pair in the foregoing example is merely for illustration purposes, and should not constitute any limitation on this application. The resource management method in this embodiment of the present application is also applicable to resource management for an administration queue. For example, the resource management apparatus may release some resources for the administration queue, to reduce a queue depth of the administration queue.

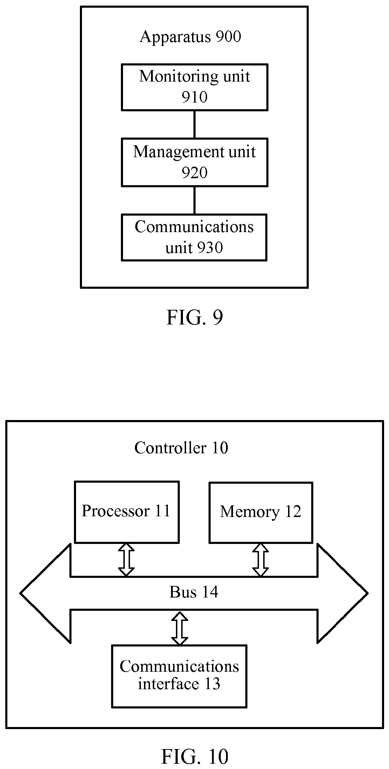

The resource management method provided in the embodiments of the present application is described in detail above with reference to FIG. 1 to FIG. 8. A resource management apparatus in embodiments of the present application is described in detail below with reference to FIG. 9 to FIG. 11.

FIG. 9 is a schematic block diagram of a resource management apparatus 900 according to an embodiment of the present application. It should be understood that, the resource management apparatus 900 shown in FIG. 9 is merely an example, and the resource management apparatus in this embodiment of the present application may further include another module or unit, or include modules having functions similar to those of modules in FIG. 9, or may not need to include all modules in FIG. 9.

Specifically, the apparatus 900 is configured in a resource management system including at least one non-volatile memory NVM subsystem and at least one host. The NVM subsystem includes at least one controller and a plurality of storage mediums. Each of the at least one controller is configured to manage at least one storage medium. A first host in the at least one host communicates with a first controller in a first NVM subsystem in the at least one NVM subsystem by using at least one input/output I/O queue pair. The first NVM subsystem is any NVM subsystem in the resource management system. The I/O queue pair includes at least one submission queue and at least one completion queue. Each of the at least one submission queue is used to store an access request message to be processed by the first host. Each of the at least one completion queue is used to store a result of an access request message sent by the first host and completed by the controller.

As shown in FIG. 9, the apparatus 900 includes:
a monitoring unit 910, configured to monitor resource utilization of a first queue in the at least one I/O queue pair, where the resource utilization of the first queue is used to identify utilization of storage space allocated to the first queue, and the first queue includes any submission queue SQ and/or any completion queue CQ in the at least one I/O queue pair; and
a management unit 920, configured to release, when the monitoring unit detects that the resource utilization of the first queue satisfies a preset condition, a storage resource occupied by the first queue.

Optionally, the resource utilization of the first queue includes a quantity of times that the first host and the first controller transmit information within a first preset time period by using the first queue.

Optionally, that the management unit 920 is configured to release, when the monitoring unit 910 detects that the resource utilization of the first queue satisfies a preset condition, storage space occupied by the first queue includes:
when the monitoring unit 910 detects, within the first preset time period, that the quantity of times that the first host and the first controller transmit information by using the first queue is less than or equal to a first preset threshold, reducing a maximum queue depth preconfigured for the first queue; and when the monitoring unit 910 detects, within the first preset time period, that the quantity of times that the first host and the first controller transmit information by using the first queue is less than or equal to a second preset threshold, deleting the first queue, where
the first preset threshold is greater than the second preset threshold, and the preconfigured maximum queue depth is used to identify a maximum value of a quantity of access request messages that can be stored in the first queue within a same time.

Optionally, the resource utilization of the first queue includes an effective queue depth ratio of the first queue within a second preset time period, and the effective queue depth ratio of the first queue is a ratio of a queue depth actually used by the first queue to a preconfigured maximum queue depth.

Optionally, that the management unit 920 is configured to release, when the monitoring unit 910 detects that the resource utilization of the first queue satisfies a preset condition, storage space occupied by the first queue includes:
when the monitoring unit 910 detects, within the second preset time period, that the effective queue depth ratio of the first queue is less than or equal to a third preset threshold,
reducing the maximum queue depth preconfigured for the first queue; and when the monitoring unit 910 detects, within the second preset time period, that the effective queue depth ratio of the first queue is less than or equal to a fourth preset threshold, deleting the first queue, where the third preset threshold is greater than the fourth preset threshold.

Optionally, if a resource for the first queue is provided by the first host, the apparatus 900 is a processor of the first host; or if a resource for the first queue is provided by the NVM subsystem, the apparatus 900 is the first controller.

Optionally, the apparatus 900 further includes a communications unit 930, and when the apparatus 900 is the first controller, the communications unit 930 is configured to receive a resource monitoring command sent by the first host, where the resource monitoring command is used to instruct the first controller to monitor the resource utilization of the first queue in the at least one I/O queue pair.

Optionally, when the apparatus 900 is the first controller, the communications unit 930 is further configured to receive an asynchronous event request AER message sent by the first host, where the AER message includes a field used to indicate the resource monitoring command.

Optionally, when the apparatus 900 is the first controller, the communications unit 930 is further configured to send a resource indication message to a second host, so that the second host applies for a required queue resource based on the resource indication message, where the resource indication message indicates a size of the released resource, and the second host is any host in the resource management system other than the first host.

Optionally, when the apparatus 900 is the first controller, the communications unit 930 is further configured to send the resource indication message to a second controller, so that the second controller sends the resource indication message to the second host, and the second controller is any controller in the first NVM subsystem other than the first controller.

Optionally, when the apparatus 900 is the first controller, the communications unit 930 is further configured to send the resource indication message to the first host, so that the first host sends the resource indication message to the second host.

Optionally, when the apparatus 900 is the first host, the communications unit 930 is further configured to send the resource indication message to the second host.

It should be understood that, the resource management apparatus 900 shown in FIG. 9 may correspond to the resource management apparatus in the resource management method in the foregoing embodiment, and specifically, may correspond to the first controller in the resource management method in FIG. 7, or the first host in the resource management method in FIG. 8; and the foregoing and other operations and/or functions of the units in the resource management apparatus 900 are respectively for implementing corresponding procedures in the resource management methods in FIG. 7 and FIG. 8. For brevity, details are not described herein again.

The resource management apparatus provided in this embodiment of the present application monitors resource utilization of a queue in each queue pair configured for a host and a controller, and releases, when the resource utilization of the queue is relatively low, storage space occupied by the queue, so that another host or NVM subsystem can use the released storage space according to a requirement.

Therefore, a queue resource is managed and optimized, and resource utilization is greatly improved by releasing an idle resource in time; and an access delay is reduced, and user experience is improved. FIG. 10 is a schematic block diagram of a resource management controller 10 according to an embodiment of the present application. The controller 10 is configured in a resource management system including at least one non-volatile memory NVM subsystem and at least one host. The NVM subsystem includes at least one controller and a plurality of storage mediums. Each controller is configured to manage at least one storage medium. A first host in the at least one host communicates with the controller 10 in a first NVM subsystem in the at least one NVM subsystem by using at least one input/output I/O queue pair. The first NVM subsystem is any NVM subsystem in the resource management system. The I/O queue pair includes at least one submission queue and at least one completion queue. Each submission queue is used to store an access request message to be processed by the first host. Each completion queue is used to store a result of an access request message sent by the first host and completed by the controller.

As shown in FIG. 10, the controller 10 includes a processor 11, a memory 12, a communications interface 13, and a bus 14. The processor 11, the memory 12, and the communications interface 13 communicate with each other by using the bus 14, or may implement communication by wireless transmission or by another means. The memory 12 is configured to store an instruction. The processor 11 is configured to execute the instruction stored in the memory 12. The memory 12 stores program code, and the processor 11 may invoke the program code stored in the memory 12, to perform the following operations:
monitoring resource utilization of a first queue in the at least one I/O queue pair, where the resource utilization of the first queue is used to identify utilization of storage space allocated to the first queue, and the first queue includes any submission queue SQ and/or
any completion queue CQ in the at least one I/O queue pair; and releasing, when detecting that the resource utilization of the first queue satisfies a preset condition, storage space occupied by the first queue.

It should be understood that, in this embodiment of the present application, the processor 11 may be a CPU, or the processor 11 may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, any conventional processor, or the like.

The memory 12 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs are available, for example, a static random access memory (static RAM, SRAM), a dynamic random access memory (DRAM), a synchronous dynamic random access memory (synchronous DRAM, SDRAM), a double data rate synchronous dynamic random access memory (double Data Rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The bus 14 may further include a power bus, a control bus, a status signal bus, and the like, in addition to a data bus. However, for clarity of description, various buses are marked as the bus 14 in the figure. It should be understood that, the resource management controller 10 shown in FIG. 10 may correspond to the resource management apparatus 900 in the embodiment shown in FIG. 9, and may correspond to the first controller in the resource management method in FIG. 7; and the foregoing and other operations and/or functions of the units in the resource management controller 10 are respectively for implementing corresponding procedures in the resource management method in FIG. 7. For brevity, details are not described herein again.

Therefore, the resource management apparatus in this embodiment of the present application monitors resource utilization of a queue in an I/O queue pair configured for a host and a controller, and releases, when the resource utilization of the queue satisfies the preset condition, storage space occupied by the queue, so that another host or NVM subsystem can use the released storage space according to a requirement. Therefore, a queue resource is managed and optimized, and resource utilization is greatly improved by releasing an idle resource in time; and an access delay is reduced, and user experience is improved.

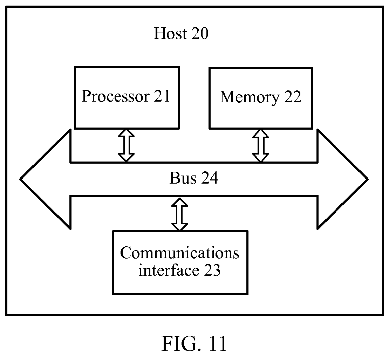

FIG. 11 is a schematic block diagram of a resource management host 20 according to an embodiment of the present application. The host 20 is configured in a resource management system including at least one non-volatile memory NVM subsystem and at least one host. The NVM subsystem includes at least one controller and a plurality of storage mediums. Each controller is configured to manage at least one storage medium. The host 20 in the at least one host communicates with a first controller in a first NVM subsystem in the at least one NVM subsystem by using at least one input/output I/O queue pair. The first NVM subsystem is any NVM subsystem in the resource management system. The I/O queue pair includes at least one submission queue and at least one completion queue. Each submission queue is used to store an access request message to be processed by the host 20. Each completion queue is used to store a result of the access request message sent by the host 20 and completed by the controller.

As shown in FIG. 11, the host 20 includes a processor 21, a memory 22, a communications interface 23, and a bus 24. The processor 21, the memory 22, and the communications interface 23 communicate with each other by using the bus 24, or may implement communication by wireless transmission or by another means. The memory 22 is configured to store an instruction. The processor 21 is configured to execute the instruction stored in the memory 22. The memory 22 stores program code, and the processor 21 may invoke the program code stored in the memory 22, to perform the following operations:
monitoring resource utilization of a first queue in the at least one I/O queue pair, where the resource utilization of the first queue is used to identify utilization of storage space allocated to the first queue, and the first queue includes any submission queue SQ and/or
any completion queue CQ in the at least one I/O queue pair; and releasing, when detecting that the resource utilization of the first queue satisfies a preset condition, storage space occupied by the first queue.

It should be understood that, in this embodiment of the present application, the processor 21 may be a CPU, or the processor 21 may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, any conventional processor, or the like.

The memory 22 may be a volatile memory or a non-volatile memory, or may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. For example but not for limitation, many forms of RAMs are available, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DRRAM).

The bus 24 may further include a power bus, a control bus, a status signal bus, and the like, in addition to a data bus. However, for clarity of description, various buses are marked as the bus 24 in the figure. It should be understood that, the resource management host 20 shown in FIG. 11 may correspond to the resource management apparatus 900 in FIG. 9, and may correspond to the first host in the resource management method in FIG. 8; and the foregoing and other operations and/or functions of the units in the resource management host 20 are respectively for implementing corresponding procedures in the resource management method in FIG. 8. For brevity, details are not described herein again. Therefore, the resource management host in this embodiment of the present application monitors resource utilization of a queue in an I/O queue pair configured for a host and a controller, and releases, when the resource utilization of the queue satisfies the preset condition, storage space occupied by the queue, so that another host or NVM subsystem can use the released storage space according to a requirement. Therefore, a queue resource is managed and optimized, and resource utilization is greatly improved by releasing an idle resource in time; and an access delay is reduced, and user experience is improved.

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on the computer, the procedures or functions according to the embodiments of the present application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, such as a server or a data center, integrating one or more usable mediums. The usable medium may be a magnetic medium (for example, a floppy disk, a hard disk, or a magnetic tape), an optical medium (for example, a DVD), a semiconductor medium, or the like. The semiconductor medium may be a solid state drive.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiments. Details are not described herein again.

## Claims

1. A resource management method, applied to a resource management system comprising a non-volatile memory, NVM, subsystem and at least one host, wherein the NVM subsystem comprises a controller and a plurality of storage mediums; the controller is configured to manage at least one storage medium; **characterised in that** a first host communicates with the controller in the NVM subsystem by using an input/output, I/O, queue pair; the I/O queue pair comprises a submission queue and a completion queue; the submission queue is used to store an access request message to be processed by the first host; the completion queue is used to store a result of an access request message sent by the first host and completed by the controller; and the method comprises:
monitoring (S720), by a resource management apparatus, resource utilization of a first queue in the I/O queue pair, wherein the resource utilization of the first queue is used to identify utilization of storage space allocated to the first queue, and the first queue is one queue in the I/O queue pair;
releasing (S730), by the resource management apparatus when detecting that the resource utilization of the first queue satisfies a preset condition, the storage space occupied by the first queue; and
migrating (S740), by the resource management apparatus when the to-be-released resource for the first queue stores an access request message, the access request message stored in the to-be-released storage space to a second queue, and the type of the second queue is the same as the first queue in the I/O queue pair.

2. The method according to claim 1, wherein the resource utilization of the first queue comprises a quantity of times that the first host and the controller transmit information within a first preset time period by using the first queue.

3. The method according to claim 2, wherein the releasing, by the resource management apparatus when detecting that the resource utilization of the first queue satisfies a preset condition, the storage space occupied by the first queue comprises:
when detecting, within the first preset time period, that the quantity of times that the first host and the controller transmit information is less than or equal to a first preset threshold, reducing, by the resource management apparatus, a maximum queue depth preconfigured for the first queue; and
when detecting, within the first preset time period, that the quantity of times that the first host and the controller transmit information is less than or equal to a second preset threshold, deleting, by the resource management apparatus, the first queue, wherein
the first preset threshold is greater than the second preset threshold, and the preconfigured maximum queue depth is used to identify a maximum value of a quantity of access request messages that can be stored in the first queue within a same time.

4. The method according to claim 1, wherein the resource utilization of the first queue comprises an effective queue depth ratio of the first queue within a second preset time period, and the effective queue depth ratio of the first queue is a ratio of a queue depth actually used by the first queue to a preconfigured maximum queue depth.

5. The method according to claim 4, wherein the releasing, by the resource management apparatus when detecting that the resource utilization of the first queue satisfies a preset condition, the storage space occupied by the first queue comprises:
when detecting, within the second preset time period, that the effective queue depth ratio of the first queue is less than or equal to a third preset threshold, reducing, by the resource management apparatus, the maximum queue depth preconfigured for the first queue; and
when detecting, within the second preset time period, that the effective queue depth ratio of the first queue is less than or equal to a fourth preset threshold, deleting, by the resource management apparatus, the first queue, wherein
the third preset threshold is greater than the fourth preset threshold.

6. The method according to any one of claims 1 to 5, wherein
a resource for the first queue is provided by the first host, the resource management apparatus is a processor of the first host; or
a resource for the first queue is provided by the NVM subsystem, the resource management apparatus is the controller.

7. The method according to claim 6, wherein the resource management apparatus is the controller, before the monitoring, by a resource management apparatus, resource utilization of the first queue, the method further comprises:
receiving, by the controller, a resource monitoring command sent by the first host, wherein the resource monitoring command is used to instruct the controller to monitor the resource utilization of the first queue in the I/O queue pair.

8. The method according to claim 7, wherein the receiving a resource monitoring command sent by the first host comprises:
receiving, by the controller, an asynchronous event request, AER, message sent by the first host, wherein the AER message comprises a field used to indicate the resource monitoring command.

9. The method according to any one of claims 1 to 8, wherein after the releasing the storage resource occupied by the first queue, the method further comprises:
sending, by the resource management apparatus, a resource indication message to a second host, so that the second host applies for a required queue resource based on the resource indication message, wherein the resource indication message indicates a size of the released storage space, and the second host is any host in the resource management system other than the first host.

10. A resource management apparatus (900), wherein the apparatus is configured in a resource management system comprising a non-volatile memory, NVM, subsystem and at least one host; the NVM subsystem comprises a controller and a plurality of storage mediums; the controller is configured to manage at least one storage medium; **characterised in that** a first host in the at least one host communicates with the controller in the NVM subsystem by using an input/output, I/O, queue pair; the I/O queue pair comprises a submission queue and a completion queue; the submission queue is used to store an access request message to be processed by the first host; the completion queue is used to store a result of an access request message sent by the first host and completed by the controller; and the apparatus comprises:
a monitoring unit (910), configured to monitor resource utilization of a first queue in the I/O queue pair, wherein the resource utilization of the first queue is used to identify utilization of storage space allocated to the first queue, and the first queue comprises one queue in the I/O queue pair; and
a management unit (920), configured to:
release, when the monitoring unit detects that the resource utilization of the first queue satisfies a preset condition, storage space occupied by the first queue; and
migrate, when the to-be-released resource for the first queue stores an access request message, the access request message stored in the to-be-released storage space to a second queue, and the type of the second queue is same as the first queue in the I/O queue pair.

11. The apparatus according to claim 10, wherein the resource utilization of the first queue comprises a quantity of times that the first host and the controller transmit information within a first preset time period by using the first queue.

12. The apparatus according to claim 11, wherein that the management unit is configured to release, when the monitoring unit detects that the resource utilization of the first queue satisfies a preset condition, storage space occupied by the first queue comprises:
when the monitoring unit detects, within the first preset time period, that the quantity of times that the first host and the controller transmit information by using the first queue is less than or equal to a first preset threshold, reducing a maximum queue depth preconfigured for the first queue; and
when the monitoring unit detects, within the first preset time period, that the quantity of times that the first host and the controller transmit information by using the first queue is less than or equal to a second preset threshold, deleting the first queue, wherein
the first preset threshold is greater than the second preset threshold, and the preconfigured maximum queue depth is used to identify a maximum value of a quantity of access request messages that can be stored in the first queue within a same time.

13. The apparatus according to claim 10, wherein the resource utilization of the first queue comprises an effective queue depth ratio of the first queue within a second preset time period, and the effective queue depth ratio of the first queue is a ratio of a queue depth actually used by the first queue to a preconfigured maximum queue depth.

14. The apparatus according to claim 13, wherein that the management unit is configured to release, when the monitoring unit detects that the resource utilization of the first queue satisfies a preset condition, storage space occupied by the first queue comprises:
when the monitoring unit detects, within the second preset time period, that the effective queue depth ratio of the first queue is less than or equal to a third preset threshold, reducing the maximum queue depth preconfigured for the first queue; and when the monitoring unit detects, within the second preset time period, that the effective queue depth ratio of the first queue is less than or equal to a fourth preset threshold, deleting the first queue, wherein
the third preset threshold is greater than the fourth preset threshold.

15. The apparatus according to any one of claims 10 to 14, wherein
a resource for the first queue is provided by the first host, the apparatus is a processor of the first host; or
a resource for the first queue is provided by the NVM subsystem, the apparatus is the first controller.

## Patentansprüche

1. Ressourcenverwaltungsverfahren, das auf ein Ressourcenverwaltungssystem angewendet wird, das ein nichtflüchtiges Speicherteilsystem (non-volatile memory subsystem - NVM-Teilsystem) und mindestens einen Host umfasst, wobei das NVM-Teilsystem eine Steuerung und eine Vielzahl von Speichermedien umfasst; wobei die Steuerung dazu konfiguriert ist, mindestens ein Speichermedium zu verwalten; **dadurch gekennzeichnet, dass** ein erster Host unter Verwendung eines Eingang/Ausgang(E/A)-Warteschlangenpaars mit der Steuerung in dem NVM-Teilsystem kommuniziert; wobei das E/A-Warteschlangenpaar eine Übermittlungswarteschlange und eine Fertigstellungswarteschlange umfasst; wobei die Übermittlungswarteschlange verwendet wird, um eine durch den ersten Host zu verarbeitende Zugangsanforderungsnachricht zu speichern; wobei die Fertigstellungswarteschlange verwendet wird, um ein durch den ersten Host gesendetes und durch die Steuerung fertiggestelltes Ergebnis einer Zugangsanforderungsnachricht zu speichern; und wobei das Verfahren Folgendes umfasst:
Überwachen (S720) der Ressourcenauslastung einer ersten Warteschlange in dem E/A-Warteschlangenpaar durch eine Ressourcenverwaltungsvorrichtung, wobei die Ressourcenauslastung der ersten Warteschlange verwendet wird, um die Auslastung eines der ersten Warteschlange zugewiesenen Speicherplatzes zu identifizieren, und die erste Warteschlange eine Warteschlange in dem E/A-Warteschlangenpaar ist;
Freigeben (S730) des durch die erste Warteschlange belegten Speicherplatzes durch die Ressourcenverwaltungsvorrichtung, wenn detektiert wird, dass die Ressourcenauslastung der ersten Warteschlange eine voreingestellte Bedingung erfüllt; und
Migrieren (S740), wenn die freizugebende Ressource für die erste Warteschlange eine Zugangsanforderungsnachricht speichert, der in dem freizugebenden Speicherplatz gespeicherten Zugangsanforderungsnachricht zu einer zweiten Warteschlange, wobei die Art der zweiten Warteschlange die gleiche ist wie die der ersten Warteschlange in dem E/A-Warteschlangenpaar.

2. Verfahren nach Anspruch 1, wobei die Ressourcenauslastung der ersten Warteschlange eine Häufigkeit umfasst, mit welcher der erste Host und die Steuerung innerhalb eines ersten voreingestellten Zeitraums unter Verwendung der ersten Warteschlange Informationen übertragen.

3. Verfahren nach Anspruch 2, wobei das Freigeben des durch die erste Warteschlange belegten Speicherplatzes durch die Ressourcenverwaltungsvorrichtung, wenn detektiert wird, dass die Ressourcenauslastung der ersten Warteschlange eine voreingestellte Bedingung erfüllt, Folgendes umfasst:
wenn innerhalb des ersten voreingestellten Zeitraums detektiert wird, dass die Häufigkeit, mit welcher der erste Host und die Steuerung Informationen übertragen, kleiner oder gleich einem ersten voreingestellten Schwellenwert ist, Reduzieren einer für die erste Warteschlange vorkonfigurierten maximalen Warteschlangentiefe durch die Ressourcenverwaltungsvorrichtung; und
wenn innerhalb des ersten voreingestellten Zeitraums detektiert wird, dass die Häufigkeit, mit welcher der erste Host und die Steuerung Informationen übertragen, kleiner oder gleich einem zweiten voreingestellten Schwellenwert ist, Löschen der ersten Warteschlange durch die Ressourcenverwaltungsvorrichtung, wobei
der erste voreingestellte Schwellenwert größer als der zweite voreingestellte Schwellenwert ist und die vorkonfigurierte maximale Warteschlangentiefe verwendet wird, um einen maximalen Wert einer Menge an Zugangsanforderungsnachrichten zu identifizieren, die zur gleichen Zeit in der ersten Warteschlange gespeichert sein kann.

4. Verfahren nach Anspruch 1, wobei die Ressourcenauslastung der ersten Warteschlange ein effektives Warteschlangentiefenverhältnis der ersten Warteschlange innerhalb eines zweiten voreingestellten Zeitraums umfasst und das effektive Warteschlangentiefenverhältnis der ersten Warteschlange ein Verhältnis einer Warteschlangentiefe, die tatsächlich von der ersten Warteschlange genutzt wird, zu einer vorkonfigurierten maximalen Warteschlangentiefe ist.

5. Verfahren nach Anspruch 4, wobei das Freigeben des durch die erste Warteschlange belegten Speicherplatzes durch die Ressourcenverwaltungsvorrichtung, wenn detektiert wird, dass die Ressourcenauslastung der ersten Warteschlange eine voreingestellte Bedingung erfüllt, Folgendes umfasst:
wenn innerhalb des zweiten voreingestellten Zeitraums detektiert wird, dass das effektive Warteschlangentiefenverhältnis der ersten Warteschlange kleiner oder gleich einem dritten voreingestellten Schwellenwert ist, Reduzieren der für die erste Warteschlange vorkonfigurierten maximalen Warteschlangentiefe durch die Ressourcenverwaltungsvorrichtung; und
wenn innerhalb des zweiten voreingestellten Zeitraums detektiert wird, dass das effektive Warteschlangentiefenverhältnis der ersten Warteschlange kleiner oder gleich einem vierten voreingestellten Schwellenwert ist, Löschen der ersten Warteschlange durch die Ressourcenverwaltungsvorrichtung, wobei
der dritte voreingestellte Schwellenwert größer als der vierte voreingestellte Schwellenwert ist.

6. Verfahren nach einem der Ansprüche 1 bis 5, wobei eine Ressource für die erste Warteschlange durch den ersten Host bereitgestellt wird, wobei die Ressourcenverwaltungsvorrichtung ein Prozessor des ersten Hosts ist; oder
eine Ressource für die erste Warteschlange durch das NVM-Teilsystem bereitgestellt, wobei die Ressourcenverwaltungsvorrichtung die Steuerung ist.

7. Verfahren nach Anspruch 6, wobei die Ressourcenverwaltungsvorrichtung die Steuerung ist, wobei das Verfahren vor dem Überwachen der Ressourcenauslastung der ersten Warteschlange durch eine Ressourcenverwaltungsvorrichtung ferner Folgendes umfasst:
Empfangen eines durch den ersten Host gesendeten Ressourcenüberwachungsbefehls durch die Steuerung, wobei der Ressourcenüberwachungsbefehl verwendet wird, um die Steuerung anzuweisen, die Ressourcenauslastung der ersten Warteschlange in dem E/A-Warteschlangenpaar zu überwachen.

8. Verfahren nach Anspruch 7, wobei das Empfangen eines durch den ersten Host gesendeten Ressourcenüberwachungsbefehls Folgendes umfasst:
Empfangen einer durch den ersten Host gesendeten Nachricht für die Anforderung eines asynchronen Ereignisses (asynchronous event request - AER) durch die Steuerung, wobei die AER-Nachricht ein Feld umfasst, das verwendet wird, um den Ressourcenüberwachungsbefehl anzugeben.

9. Verfahren nach einem der Ansprüche 1 bis 8, wobei das Verfahren nach dem Freigeben der durch die erste Warteschlange belegten Speicherressource ferner Folgendes umfasst:
Senden einer Ressourcenangabenachricht durch die Ressourcenverwaltungsvorrichtung an einen zweiten Host, sodass der zweite Host eine benötigte Warteschlangenressource auf Grundlage der Ressourcenangabenachricht beantragt, wobei die Ressourcenangabenachricht eine Größe des freigegebenen Speicherplatzes angibt und der zweite Host ein beliebiger Host in dem Ressourcenverwaltungssystem mit Ausnahme des ersten Hosts ist.

10. Ressourcenverwaltungsvorrichtung (900), wobei die Vorrichtung in einem Ressourcenverwaltungssystem konfiguriert ist, das ein nichtflüchtiges Speicherteilsystem (NVM-Teilsystem) und mindestens einen Host umfasst; wobei das NVM-Teilsystem eine Steuerung und eine Vielzahl von Speichermedien umfasst; wobei die Steuerung dazu konfiguriert ist, mindestens ein Speichermedium zu verwalten; **dadurch gekennzeichnet, dass** ein erster Host des mindestens einen Hosts unter Verwendung eines Eingang/Ausgang(E/A)-Warteschlangenpaars mit der Steuerung in dem NVM-Teilsystem kommuniziert; wobei das E/A-Warteschlangenpaar eine Übermittlungswarteschlange und eine Fertigstellungswarteschlange umfasst; wobei die Übermittlungswarteschlange verwendet wird, um eine durch den ersten Host zu verarbeitende Zugangsanforderungsnachricht zu speichern; wobei die Fertigstellungswarteschlange verwendet wird, um ein durch den ersten Host gesendetes und durch die Steuerung fertiggestelltes Ergebnis einer Zugangsanforderungsnachricht zu speichern; und wobei die Vorrichtung Folgendes umfasst:
eine Überwachungseinheit (910), die dazu konfiguriert ist, die Ressourcenauslastung einer ersten Warteschlange in dem E/A-Warteschlangenpaar zu überwachen, wobei die Ressourcenauslastung der ersten Warteschlange verwendet wird, um die Auslastung eines der ersten Warteschlange zugewiesenen Speicherplatzes zu identifizieren, und die erste Warteschlange eine Warteschlange in dem E/A-Warteschlangenpaar umfasst; und
eine Verwaltungseinheit (920), die für Folgendes konfiguriert ist:
Freigeben des durch die erste Warteschlange belegten Speicherplatzes, wenn die Überwachungseinheit detektiert, dass die Ressourcenauslastung der ersten Warteschlange eine voreingestellte Bedingung erfüllt; und
Migrieren, wenn die freizugebende Ressource für die erste Warteschlange eine Zugangsanforderungsnachricht speichert, der in dem freizugebenden Speicherplatz gespeicherten Zugangsanforderungsnachricht zu einer zweiten Warteschlange, wobei die Art der zweiten Warteschlange die gleiche ist wie die der ersten Warteschlange in dem E/A-Warteschlangenpaar.

11. Vorrichtung nach Anspruch 10, wobei die Ressourcenauslastung der ersten Warteschlange eine Häufigkeit umfasst, mit welcher der erste Host und die Steuerung innerhalb eines ersten voreingestellten Zeitraums unter Verwendung der ersten Warteschlange Informationen übertragen.

12. Vorrichtung nach Anspruch 11, wobei die Konfigurierung der Verwaltungseinheit zum Freigeben des durch die erste Warteschlange belegten Speicherplatzes, wenn die Überwachungseinheit detektiert, dass die Ressourcenauslastung der ersten Warteschlange eine voreingestellte Bedingung erfüllt, Folgendes umfasst:
wenn die Überwachungseinheit innerhalb des ersten voreingestellten Zeitraums detektiert, dass die Häufigkeit, mit welcher der erste Host und die Steuerung unter Verwendung der ersten Warteschlange Informationen übertragen, kleiner oder gleich einem ersten voreingestellten Schwellenwert ist, Reduzieren einer für die erste Warteschlange vorkonfigurierten maximalen Warteschlangentiefe; und
wenn die Überwachungseinheit innerhalb des ersten voreingestellten Zeitraums detektiert, dass die Häufigkeit, mit welcher der erste Host und die Steuerung unter Verwendung der ersten Warteschlange Informationen übertragen, kleiner oder gleich einem zweiten voreingestellten Schwellenwert ist, Löschen der ersten Warteschlange, wobei
der erste voreingestellte Schwellenwert größer als der zweite voreingestellte Schwellenwert ist und die vorkonfigurierte maximale Warteschlangentiefe verwendet wird, um einen maximalen Wert einer Menge an Zugangsanforderungsnachrichten zu identifizieren, die zur gleichen Zeit in der ersten Warteschlange gespeichert sein kann.

13. Vorrichtung nach Anspruch 10, wobei die Ressourcenauslastung der ersten Warteschlange ein effektives Warteschlangentiefenverhältnis der ersten Warteschlange innerhalb eines zweiten voreingestellten Zeitraums umfasst und das effektive Warteschlangentiefenverhältnis der ersten Warteschlange ein Verhältnis einer Warteschlangentiefe, die tatsächlich durch die erste Warteschlange genutzt wird, zu einer vorkonfigurierten maximalen Warteschlangentiefe ist.

14. Vorrichtung nach Anspruch 13, wobei die Konfigurierung der Verwaltungseinheit zum Freigeben des durch die erste Warteschlange belegten Speicherplatzes, wenn die Überwachungseinheit detektiert, dass die Ressourcenauslastung der ersten Warteschlange eine voreingestellte Bedingung erfüllt, Folgendes umfasst:
wenn die Überwachungseinheit innerhalb des zweiten voreingestellten Zeitraums detektiert, dass das effektive Warteschlangentiefenverhältnis der ersten Warteschlange kleiner oder gleich einem dritten voreingestellten Schwellenwert ist, Reduzieren der für die erste Warteschlange vorkonfigurierten maximalen Warteschlangentiefe; und wenn die Überwachungseinheit innerhalb des zweiten voreingestellten Zeitraums detektiert, dass das effektive Warteschlangentiefenverhältnis der ersten Warteschlange kleiner oder gleich einem vierten voreingestellten Schwellenwert ist, Löschen der ersten Warteschlange, wobei
der dritte voreingestellte Schwellenwert größer als der vierte voreingestellte Schwellenwert ist.

15. Vorrichtung nach einem der Ansprüche 10 bis 14, wobei eine Ressource für die erste Warteschlange durch den ersten Host bereitgestellt wird, wobei die Vorrichtung ein Prozessor des ersten Hosts ist; oder
eine Ressource für die erste Warteschlange durch das NVM-Teilsystem bereitgestellt, wobei die Vorrichtung die erste Steuerung ist.

## Revendications

1. Procédé de gestion de ressources, appliqué à un système de gestion de ressources comprenant un sous-système de mémoire non volatile, NVM, et au moins un hôte, dans lequel le sous-système NVM comprend un contrôleur et une pluralité de supports de stockage ; le contrôleur est configuré pour gérer au moins un support de stockage ; **caractérisé en ce qu'**un premier hôte communique avec le contrôleur dans le sous-système NVM à l'aide d'une paire de files d'attente entrée/sortie, E/S ; la paire de files d'attente E/S comprend une file d'attente de soumission et une file d'attente d'achèvement ; la file d'attente de soumission est utilisée pour stocker un message de demande d'accès à traiter par le premier hôte ; la file d'attente d'achèvement est utilisée pour stocker un résultat d'un message de demande d'accès envoyé par le premier hôte et complété par le contrôleur ; et le procédé comprend :
la surveillance (S720), par un appareil de gestion de ressources, de l'utilisation des ressources d'une première file d'attente dans la paire de files d'attente E/S, dans lequel l'utilisation des ressources de la première file d'attente est utilisée pour identifier l'utilisation de l'espace de stockage alloué à la première file d'attente, et la première file d'attente est une file d'attente dans la paire de files d'attente E/S ;
la libération (S730), par l'appareil de gestion de ressources quand il détecte que l'utilisation des ressources de la première file d'attente satisfait à une condition prédéfinie, de l'espace de stockage occupé par la première file d'attente ; et
la migration (S740), par l'appareil de gestion de ressources quand la ressource à libérer pour la première file d'attente stocke un message de demande d'accès, du message de demande d'accès stocké dans l'espace de stockage à libérer vers une seconde file d'attente, et le type de la seconde file d'attente est le même que la première file d'attente de la paire de files d'attente E/S.

2. Procédé selon la revendication 1, dans lequel l'utilisation des ressources de la première file d'attente comprend une quantité de fois que le premier hôte et le contrôleur transmettent des informations dans une première période de temps prédéfinie en utilisant la première file d'attente.

3. Procédé selon la revendication 2, dans lequel la libération, par l'appareil de gestion de ressources quand il détecte que l'utilisation des ressources de la première file d'attente satisfait à une condition prédéfinie, de l'espace de stockage occupé par la première file d'attente comprend :
lors de la détection, au cours de la première période de temps prédéfinie, du fait que la quantité de fois que le premier hôte et le contrôleur transmettent des informations est inférieure ou égale à un premier seuil prédéfini, la réduction, par l'appareil de gestion de ressources, d'une profondeur de file d'attente maximale préconfigurée pour la première file d'attente ; et
lors de la détection, au cours de la première période de temps prédéfinie, du fait que la quantité de fois que le premier hôte et le contrôleur transmettent des informations est inférieure ou égale à un deuxième seuil prédéfini, la suppression, par l'appareil de gestion de ressources, de la première file d'attente,
dans lequel le premier seuil prédéfini est supérieur au deuxième seuil prédéfini, et la profondeur de file d'attente maximale préconfigurée est utilisée pour identifier une valeur maximale d'une quantité de messages de demande d'accès qui peuvent être stockés dans la première file d'attente dans un même temps.

4. Procédé selon la revendication 1, dans lequel l'utilisation des ressources de la première file d'attente comprend un rapport de profondeur de file d'attente effective de la première file d'attente au cours d'une seconde période de temps prédéfinie, et le rapport de profondeur de file d'attente effective de la première file d'attente est un rapport d'une profondeur de file d'attente réellement utilisée par la première file d'attente à une profondeur de file d'attente maximale préconfigurée.

5. Procédé selon la revendication 4, dans lequel la libération, par l'appareil de gestion de ressources quand il détecte que l'utilisation des ressources de la première file d'attente satisfait à une condition prédéfinie, de l'espace de stockage occupé par la première file d'attente comprend :
lors de la détection, au cours de la seconde période de temps prédéfinie, du fait que le rapport de profondeur de file d'attente effective de la première file d'attente est inférieur ou égal à un troisième seuil prédéfini, la réduction, par l'appareil de gestion de ressources, de la profondeur de file d'attente maximale préconfigurée pour la première file d'attente ; et
lors de la détection, au cours de la seconde période de temps prédéfinie, du fait que le rapport de profondeur de file d'attente effective de la première file d'attente est inférieur ou égal à un quatrième seuil prédéfini, la suppression, par l'appareil de gestion de ressources, de la première file d'attente, dans lequel
le troisième seuil prédéfini est supérieur au quatrième seuil prédéfini.

6. Procédé selon l'une quelconque des revendications 1 à 5, dans lequel
une ressource pour la première file d'attente est fournie par le premier hôte, l'appareil de gestion de ressources est un processeur du premier hôte ; ou
une ressource pour la première file d'attente est fournie par le sous-système NVM, l'appareil de gestion de ressources est le contrôleur.

7. Procédé selon la revendication 6, dans lequel l'appareil de gestion de ressources est le contrôleur, avant la surveillance, par un appareil de gestion de ressources, de l'utilisation des ressources de la première file d'attente, le procédé comprend en outre :
la réception, par le contrôleur, d'une commande de surveillance des ressources envoyée par le premier hôte, dans lequel la commande de surveillance des ressources est utilisée pour ordonner au contrôleur de surveiller l'utilisation des ressources de la première file d'attente dans la paire de files d'attente E/S.

8. Procédé selon la revendication 7, dans lequel la réception d'une commande de surveillance des ressources envoyée par le premier hôte comprend :
la réception, par le contrôleur, d'un message de demande d'événement asynchrone, AER, envoyé par le premier hôte, dans lequel le message AER comprend un champ utilisé pour indiquer la commande de surveillance des ressources.

9. Procédé selon l'une quelconque des revendications 1 à 8, dans lequel, après la libération de la ressource de stockage occupée par la première file d'attente, le procédé comprend en outre :
l'envoi, par l'appareil de gestion de ressources, d'un message d'indication de ressource à un second hôte, de sorte que le second hôte demande une ressource de file d'attente requise sur la base du message d'indication de ressource, dans lequel le message d'indication de ressource indique une taille de l'espace de stockage libéré, et le second hôte est n'importe quel hôte dans le système de gestion de ressources autre que le premier hôte.

10. Appareil de gestion de ressources (900), dans lequel l'appareil est un système de gestion de ressources comprenant un sous-système de mémoire non volatile, NVM, et au moins un hôte ; le sous-système NVM comprend un contrôleur et une pluralité de supports de stockage ; le contrôleur est configuré pour gérer au moins un support de stockage ; **caractérisé en ce qu'**un premier hôte dans l'au moins un hôte communique avec le contrôleur dans le sous-système NVM à l'aide d'une paire de files d'attente entrée/sortie, E/S ; la paire de files d'attente E/S comprend une file d'attente de soumission et une file d'attente d'achèvement ; la file d'attente de soumission est utilisée pour stocker un message de demande d'accès à traiter par le premier hôte ; la file d'attente d'achèvement est utilisée pour stocker un résultat d'un message de demande d'accès envoyé par le premier hôte et complété par le contrôleur ; et l'appareil comprend :
une unité de surveillance (910), configurée pour surveiller l'utilisation des ressources d'une première file d'attente dans la paire de files d'attente E/S, dans lequel l'utilisation des ressources de la première file d'attente est utilisée pour identifier l'utilisation de l'espace de stockage alloué à la première file d'attente, et la première file d'attente comprend une file d'attente dans la paire de files d'attente E/S ; et
une unité de gestion (920), configurée pour :
libérer, quand l'unité de surveillance détecte que l'utilisation des ressources de la première file d'attente satisfait à une condition prédéfinie, l'espace de stockage occupé par la première file d'attente ; et
faire migrer, quand la ressource à libérer pour la première file d'attente stocke un message de demande d'accès, le message de demande d'accès stocké dans l'espace de stockage à libérer vers une seconde file d'attente, et le type de la seconde file d'attente est le même que la première file d'attente de la paire de files d'attente E/S.

11. Appareil selon la revendication 10, dans lequel l'utilisation des ressources de la première file d'attente comprend une quantité de fois que le premier hôte et le contrôleur transmettent des informations au cours d'une première période de temps prédéfinie en utilisant la première file d'attente.

12. Appareil selon la revendication 11, dans lequel le fait que l'unité de gestion est configurée pour libérer, quand l'unité de surveillance détecte que l'utilisation des ressources de la première file d'attente satisfait à une condition prédéfinie, l'espace de stockage occupé par la première file d'attente comprend :
quand l'unité de surveillance détecte, au cours de la première période de temps prédéfinie, que la quantité de fois que le premier hôte et le contrôleur transmettent des informations en utilisant la première file d'attente est inférieure ou égale à un premier seuil prédéfini, la réduction d'une profondeur de file d'attente maximale préconfigurée pour la première file d'attente ; et
quand l'unité de surveillance détecte, au cours de la première période de temps prédéfinie, que la quantité de fois que le premier hôte et le contrôleur transmettent des informations en utilisant la première file d'attente est inférieure ou égale à un deuxième seuil prédéfini, la suppression de la première file d'attente, dans lequel
le premier seuil prédéfini est supérieur au deuxième seuil prédéfini, et la profondeur de file d'attente maximale préconfigurée est utilisée pour identifier une valeur maximale d'une quantité de messages de demande d'accès qui peuvent être stockés dans la première file d'attente dans un même temps.

13. Appareil selon la revendication 10, dans lequel l'utilisation des ressources de la première file d'attente comprend un rapport de profondeur de file d'attente effective de la première file d'attente au cours d'une seconde période de temps prédéfinie, et le rapport de profondeur de file d'attente effective de la première file d'attente est un rapport d'une profondeur de file d'attente réellement utilisée par la première file d'attente à une profondeur de file d'attente maximale préconfigurée.

14. Appareil selon la revendication 13, dans lequel le fait que l'unité de gestion est configurée pour libérer, quand l'unité de surveillance détecte que l'utilisation des ressources de la première file d'attente satisfait à une condition prédéfinie, l'espace de stockage occupé par la première file d'attente comprend :
quand l'unité de surveillance détecte, au cours de la seconde période de temps prédéfinie, que le rapport de profondeur de file d'attente effective de la première file d'attente est inférieur ou égal à un troisième seuil prédéfini, la réduction de la profondeur de file d'attente maximale préconfigurée pour la première file d'attente ; et quand l'unité de surveillance détecte, au cours de la seconde période de temps prédéfinie, que le rapport de profondeur de file d'attente effective de la première file d'attente est inférieur ou égal à un quatrième seuil prédéfini, la suppression de la première file d'attente, dans lequel
le troisième seuil prédéfini est supérieur au quatrième seuil prédéfini.

15. Appareil selon l'une quelconque des revendications 10 à 14, dans lequel
une ressource pour la première file d'attente est fournie par le premier hôte, l'appareil est un processeur du premier hôte ; ou
une ressource pour la première file d'attente est fournie par le sous-système NVM, l'appareil est le premier contrôleur.
